# EUROPEAN PATENT APPLICATION

(11) **EP 4 644 167 A1**
(43) Date of publication of application: **05.11.2025**
(21) Application number: 23909486.5
(22) Date of filing: 17.10.2023
(51) Int. Cl.: B60L 53/80

(54) **CHARGING AND BATTERY SWAPPING STATION**

(30) Priority: 26.12.2022 CN 202211670697
(71) Applicant: Nio Technology (Anhui) Co., Ltd, Hefei City, Anhui 230601 (CN)
(72) Inventor: ZHOU, Xiaohong, Shanghai 201804 (CN)
(74) Representative: Vossius & Partner Patentanwälte Rechtsanwälte mbB
(86) International application number: PCT/CN2023/124894
(87) International publication number: WO 2024/139552

(57) **Abstract**

A battery charging and swapping station, including: a battery swap platform (100), which includes a platform body (110) and a vehicle positioning portion (120), the vehicle positioning portion (120) being capable of positioning different sizes of vehicles with a battery to be swapped; a battery swap device (200), which includes a bottom frame (210), a travel portion (220) and a hoistable battery swap portion, the travel portion (220) being capable of moving the bottom frame (210) in a length direction of a vehicle with a battery to be swapped, and the hoistable battery swap portion being capable of docking with chassis of vehicles with a battery to be swapped that have different battery mounting positions, and swapping traction batteries; and a battery rack (300), which includes a frame (310), the frame (310) being provided with a plurality of battery compartments (320), at least one battery compartment (320) being provided with a plurality of electrical connection portions (330), and each electrical connection portion (330) being connectable to traction batteries of one specification. The overall compatibility of the battery charging and swapping station can be improved, such that the battery charging and swapping station can be compatible with batteries of different specifications and different vehicle models, thereby improving the efficiency of the battery charging and swapping station and reducing the enterprise cost.

## Description

### Cross Reference to Related Application

The disclosure claims the priority to Chinese Patent Application No. CN 202211670697.4, filed on December 26, 2022, and entitled "BATTERY CHARGING AND SWAPPING STATION", which is incorporated herein by reference in its entirety.

### Technical Field

The disclosure relates to the technical field of battery charging and swap, and in particular to a battery charging and swapping station.

### Technical Background

Nowadays, with the development of science and technology and the advancement of technology, the market share of new energy vehicles has been increasing, and users are becoming more and more accepting of new energy vehicles. For the new energy vehicles, the convenience of energy replenishment is one of necessary and important consideration factors in vehicle purchase. Compared with a charging solution, a battery swap solution can achieve energy replenishment within a few minutes and provides the same convenience as refueling. Therefore, battery swap is an important development direction for energy replenishment.

The battery swap is typically carried out in battery charging and swapping stations, but conventional battery swap stations can only support battery swap for a single vehicle model. With the emergence of various new energy vehicle models and traction batteries of different specifications, the battery swap compatibility of the battery charging and swapping stations has become an important factor restricting the development and popularization of the battery swap solution.

In view of the above problems, Chinese patent application with publication No. CN 113291196 A discloses a battery swap system for a battery swap station. In the battery swap system, a battery placement platform of a movable battery swap device is configured to be adjustable in position in a driving direction and in dimension in a width direction of an electric vehicle, in order to improve the adaptability to traction batteries of different vehicle models.

Chinese patent document with publication No. CN 205836787 U discloses a wheel limiting mechanism of an electric vehicle battery swap system. The limiting mechanism is provided with a first driving assembly for driving a rear wheel carrying platform to slide in a width direction of a platform base, a second driving assembly for driving a front wheel carrying platform to slide in the width direction of the platform base, and a third driving assembly for driving the front wheel carrying platform to slide in a length direction of the platform base, in order to allow a parking platform to be adapted to vehicle models having different lengths and widths.

However, the above-mentioned patent application or patent document can only solve the compatibility problem of some mechanisms in the battery charging and swapping station, but cannot improve the overall compatibility of the entire station.

Accordingly, there is a need in the art for a new battery charging and swapping station to solve the above problems.

### Summary

In order to solve at least one of the above problems in the prior art, that is, the problem of poor overall compatibility of conventional battery charging and swapping stations, the disclosure provides a battery charging and swapping station, including:
a battery swap platform, which includes a platform body and a vehicle positioning portion arranged on the platform body, the platform body being configured to carry a vehicle with a battery to be swapped, and the vehicle positioning portion being configured to be capable of positioning different sizes of vehicles with a battery to be swapped;
a battery swap device, which is arranged below the platform body and includes a bottom frame, a travel portion and a hoistable battery swap portion, the travel portion being connected to the bottom frame and configured to drive the bottom frame to move relative to the platform body in a length direction of the vehicle with a battery to be swapped, and the hoistable battery swap portion being liftably arranged on an upper portion of the bottom frame and configured to be dockable with chassis of vehicles with a battery to be swapped that have different battery mounting positions, and to swap traction batteries; and
a battery rack, which includes a frame, the frame being provided with a plurality of battery compartments, at least one of the battery compartments being provided with a plurality of electrical connection portions, and each electrical connection portion being configured to be connectable to traction batteries of at least one specification so as to charge the traction batteries.

With the above technical solution, the overall compatibility of the battery charging and swapping station can be improved, such that the battery charging and swapping station can be compatible with batteries of different specifications and different vehicle models, thereby improving the efficiency of the battery charging and swapping station and reducing the research and development costs of enterprises. Specifically, the vehicle positioning portion is configured to be capable of positioning different sizes of vehicles with a battery to be swapped, so that the compatibility of the battery swap platform can be improved, and the battery swap platform can thus be compatible with different sizes of vehicle models. The travel portion of the battery swap device drives the bottom frame to move relative to the platform body in the length direction of the vehicle with a battery to be swapped, so that the compatibility of the battery swap device can be improved, and the battery swap device can thus be compatible with various vehicle models having different battery mounting positions; and such a configuration is simple and effective and does not increase the structural complexity of the battery swap device. The battery compartment is provided with the plurality of electrical connection portions, so that the compatibility of the battery rack can be improved, the battery compartment can thus be compatible with traction batteries of multiple specifications; and such a configuration does not occupy an additional space and does not affect at all the spatial layout and site selection of the battery charging and swapping station.

In a preferred technical solution of the battery charging and swapping station described above, the vehicle positioning portion includes V-shaped roller groups and I-shaped roller groups, the V-shaped roller group being configured to position one of a front wheel and a rear wheel of the vehicle with a battery to be swapped, and the I-shaped roller group being configured to support the other of the front wheel and the rear wheel for vehicles with a battery to be swapped that have different wheelbases.

In a preferred technical solution of the battery charging and swapping station described above, the I-shaped roller group is further configured to have a length in the length direction of the vehicle with a battery to be swapped that is compatible with a wheelbase range of 2700-3300 mm.

By setting the length of the I-shaped roller groups, the wheelbase range with which the battery swap platform can be compatible basically covers the wheelbases of all vehicle models, and the compatibility of the battery swap platform with the wheelbases of the vehicles is improved. Moreover, such a configuration is simple and effective and only needs to lengthen the I-shaped roller groups without increasing the structural complexity of a parking platform.

In a preferred technical solution of the battery charging and swapping station described above, the vehicle positioning portion further includes a front wheel centering mechanism and a rear wheel centering mechanism, the front wheel centering mechanism and the rear wheel centering mechanism both being configured to be capable of centering vehicles with a battery to be swapped that have different widths.

In a preferred technical solution of the battery charging and swapping station described above, the front wheel centering mechanism and the rear wheel centering mechanism are further configured to be compatible with a vehicle width range of 860-2800 mm.

By setting movement ranges of the centering mechanisms, the vehicle width range with which the battery swap platform can be compatible basically covers all vehicle models, and the compatibility of the battery swap platform with the widths of the vehicles is improved. Moreover, such a configuration is simple and effective and only needs to increase the movement distances of the centering mechanisms without increasing the structural complexity of the parking platform.

In a preferred technical solution of the battery charging and swapping station described above, the battery swap platform further includes a battery guide portion mounted below the platform body and configured to guide the traction battery to enter or exit the battery swap device.

With the provision of the battery guide portion, the battery can be guided to enter or exit the battery swap device to improve the accuracy and the success rate of battery swap.

In a preferred technical solution of the battery charging and swapping station described above, the battery guide portion includes a movement mechanism and a guide pusher, the movement mechanism being arranged on a support below the platform body and connected to the guide pusher, and the movement mechanism being configured to move the guide pusher relative to the platform body in the length direction of the vehicle with a battery to be swapped, so as to push the traction battery and the battery swap device to move synchronously during a movement of the battery swap device carrying the traction battery in the length direction of the vehicle with a battery to be swapped.

With the provision of the movable guide pusher, in addition to guiding the battery to enter or exit the battery swap platform, the battery guide portion can push the battery to move during the movement of the battery swap device to achieve linkage with the movement of the battery swap device, so as to improve the accuracy of battery swap and the consistency of the battery swap process and reduce the control complexity.

In a preferred technical solution of the battery charging and swapping station described above, the movement mechanism includes a pusher driving assembly and a pusher transmission assembly, the pusher driving assembly being fixedly connected to the support below the platform body and connected to the pusher transmission assembly, the pusher transmission assembly being connected to the guide pusher, and the guide pusher extending in a width direction of the vehicle with a battery to be swapped.

In a preferred technical solution of the battery charging and swapping station described above, the pusher transmission assembly includes a first lead screw and nut pair and a connecting plate, a lead screw of the first lead screw and nut pair being mounted on the support and arranged in the length direction of the vehicle with a battery to be swapped, the pusher driving assembly being in transmission connection with the lead screw of the first lead screw and nut pair, a nut of the first lead screw and nut pair being fixedly connected to the connecting plate, and the connecting plate being fixedly connected to the guide pusher.

In a preferred technical solution of the battery charging and swapping station described above, the battery guide portion further includes a pusher guide mechanism via which the connecting plate is connected to the support, the pusher guide mechanism being configured to provide guidance during a movement of the connecting plate relative to the platform body.

With the provision of the pusher guide mechanism, guidance can be provided during the movement of the guide pusher to improve the movement accuracy.

In a preferred technical solution of the battery charging and swapping station described above, two movement mechanisms and two guide pushers are provided, the two movement mechanisms are arranged on two sides of the battery swap device in the length direction of the vehicle with a battery to be swapped, and each movement mechanism is connected to one guide pusher.

With the provision of one movement mechanism and one guide pusher on either side of the battery swap device, the battery can be pushed in two directions to improve the accuracy of battery swap.

In a preferred technical solution of the battery charging and swapping station described above, the battery guide portion further includes a fixed guide member, which is fixedly connected to the support below the platform body.

With the provision of the fixed guide member, the battery can be guided as the battery enters or exits the battery swap device, to increase a guide range and improve the guide accuracy.

In a preferred technical solution of the battery charging and swapping station described above, the fixed guide member is a guide bar, which extends in a width direction of the vehicle with a battery to be swapped; and/or
the movement mechanism is provided with one fixed guide member on either side of the vehicle with a battery to be swapped in the width direction.

In a preferred technical solution of the battery charging and swapping station described above, the travel portion includes a travel mechanism, which is connected to the bottom frame and configured to drive the bottom frame to move in the length direction of the vehicle with a battery to be swapped.

With the provision of the travel mechanism, automatic control of the battery swap device can be achieved to improve the control accuracy and the efficiency of battery swap.

In a preferred technical solution of the battery charging and swapping station described above, the travel mechanism includes a travel driving assembly and a travel transmission assembly, the travel driving assembly being connected to the travel transmission assembly, one of the travel driving assembly and the travel transmission assembly being fixedly connected to the bottom frame, and the other thereof being fixedly connected to the ground of the battery charging and swapping station or a support below the platform body.

In a preferred technical solution of the battery charging and swapping station described above, the travel transmission assembly is a first gear and rack pair, a gear of the first gear and rack pair being connected to an output end of the travel driving assembly, one of the travel driving assembly and a rack of the first gear and rack pair being fixedly connected to the bottom frame, and the other thereof being fixedly connected to the ground of the battery charging and swapping station or the support below the platform body.

In a preferred technical solution of the battery charging and swapping station described above, the travel portion further includes a travel wheel arranged on the bottom frame.

With the provision of the travel wheel, the battery swap device can be assisted in movement to reduce the resistance during the movement.

In a preferred technical solution of the battery charging and swapping station described above, a track is further arranged on the ground of the battery charging and swapping station or the support below the platform body, and the travel wheel is rollably arranged on the track.

With the provision of the track, the travel wheel can be guided to reduce the rolling resistance of the travel wheel.

In a preferred technical solution of the battery charging and swapping station described above, the hoistable battery swap portion includes a hoisting platform and a plurality of locking/unlocking mechanisms arranged on the hoisting platform, the hoisting platform being liftably connected to the bottom frame, and the plurality of locking/unlocking mechanisms being configured to adapt to traction batteries having different fastener arrangement positions.

By configuring the plurality of locking/unlocking mechanisms to adapt to the traction batteries having different fastener arrangement positions, the compatibility of the battery swap device can be improved, and the battery swap device can thus adapt to various traction batteries having different fastener arrangement positions.

In a preferred technical solution of the battery charging and swapping station described above, the hoistable battery swap portion further includes a lifting mechanism mounted on the hoisting platform and connected to the locking/unlocking mechanism, the lifting mechanism being configured to drive a lifting movement of the locking/unlocking mechanism connected thereto relative to the hoisting platform.

With the provision of the lifting mechanism, the locking/unlocking mechanism can be driven by the lifting mechanism to perform the lifting movement, different locking/unlocking mechanisms are then controlled to participate in battery swap, so that the battery swap device can match traction batteries of various specifications and sizes, and the compatibility of the battery swap device can be improved.

In a preferred technical solution of the battery charging and swapping station described above, the lifting mechanism includes a lifting driving assembly and a lifting transmission assembly, the lifting driving assembly being mounted on the hoisting platform and connected to the lifting transmission assembly, and the lifting transmission assembly being connected to the locking/unlocking mechanism.

With the provision of the lifting driving assembly and the lifting transmission assembly, automatic lifting control of the locking/unlocking mechanism can be achieved, and the degree of automation and the efficiency of battery swap of the battery swap device can be improved.

In a preferred technical solution of the battery charging and swapping station described above, the lifting transmission assembly is a second lead screw and nut pair, a lead screw of the second lead screw and nut pair being mounted on the hoisting platform and arranged in a vertical direction, the lifting driving assembly being in transmission connection with the lead screw of the second lead screw and nut pair, and a nut of the second lead screw and nut pair being fixedly connected to the locking/unlocking mechanism.

In a preferred technical solution of the battery charging and swapping station described above, the hoistable battery swap portion further includes a lifting guide mechanism via which the locking/unlocking mechanism connected to the lifting mechanism is connected to the hoisting platform, the lifting guide mechanism being configured to provide guidance during a lifting movement of the locking/unlocking mechanism relative to the hoisting platform.

With the provision of the lifting guide mechanism, the movement accuracy of the locking/unlocking mechanism during lifting can be improved.

In a preferred technical solution of the battery charging and swapping station described above, the hoistable battery swap portion further includes a translation mechanism mounted on the hoisting platform and connected to the lifting mechanism, the translation mechanism being configured to drive the lifting mechanism connected thereto and the locking/unlocking mechanism connected to the lifting mechanism to horizontally move relative to the hoisting platform.

With the additional provision of the translation mechanism, the lifting mechanism and the locking/unlocking mechanism can be driven to horizontally move to be aligned with fasteners on the batteries of different specifications by means of the translation mechanism, the lifting mechanism drives the lifting of the locking/unlocking mechanism, and different locking/unlocking mechanisms are thus controlled to participate in battery swap, so that the battery swap device can adapt to traction batteries of various specifications and sizes by means of the combination of the two mechanisms, and the compatibility of the battery swap device can be improved significantly.

In a preferred technical solution of the battery charging and swapping station described above, the translation mechanism includes a translation driving assembly and a translation transmission assembly, and the lifting mechanism further includes a connection assembly, where the translation driving assembly is mounted on the hoisting platform and is connected to the translation transmission assembly, the translation transmission assembly is connected to the connection assembly, and the lifting driving assembly is mounted on the connection assembly.

With the provision of the translation driving assembly and the translation transmission assembly, automatic movement control of the lifting mechanism and the locking/unlocking mechanism can be achieved, and the degree of automation and the efficiency of battery swap of the battery swap device can be improved.

In a preferred technical solution of the battery charging and swapping station described above, the translation transmission assembly is a third lead screw and nut pair, a lead screw of the third lead screw and nut pair being mounted on the hoisting platform and arranged in a horizontal direction, the translation driving assembly being in transmission connection with the lead screw of the third lead screw and nut pair, and a nut of the third lead screw and nut pair being fixedly connected to the connection assembly.

In a preferred technical solution of the battery charging and swapping station described above, the hoistable battery swap portion further includes a translation guide mechanism via which the connection assembly is connected to the hoisting platform, the translation guide mechanism being configured to provide guidance during a horizontal movement of the connection assembly relative to the hoisting platform.

With the provision of the translation guide mechanism, the movement accuracy during a translation of the lifting mechanism and the locking/unlocking mechanism can be improved.

In a preferred technical solution of the battery charging and swapping station described above, the hoistable battery swap portion further includes a plurality of vehicle body positioning mechanisms arranged on the hoisting platform, which are divided into multiple groups to adapt to vehicles with a battery to be swapped that have different chassis positioning locations.

With the provision of the plurality of vehicle body positioning mechanisms, the alignment of the battery swap device with the vehicle body chassis can be achieved by using the docking of the plurality of vehicle body positioning mechanisms with the chassis of different vehicles with a battery to be swapped, and the compatibility of the battery swap device with the chassis of the vehicle can be improved.

In a preferred technical solution of the battery charging and swapping station described above, the vehicle body positioning mechanism includes a positioning driving assembly, a positioning transmission assembly and a vehicle body positioning pin, the positioning driving assembly being fixedly connected to the hoisting platform and connected to the positioning transmission assembly, and the positioning transmission assembly being connected to the vehicle body positioning pin and configured to drive the positioning transmission assembly to operate such that the positioning transmission assembly drives a lifting movement of the vehicle body positioning pin.

With the provision of the positioning driving assembly and the positioning transmission assembly, automatic lifting of the vehicle body positioning pin can be achieved, and automatic control can be achieved, avoiding that the vehicle body positioning pin collides with the chassis of the vehicle and thus the battery swap device and the chassis of the vehicle are damaged.

In a preferred technical solution of the battery charging and swapping station described above, the positioning transmission assembly is a second gear and rack pair, a gear of the second gear and rack pair being connected to an output end of the positioning driving assembly, and a rack of the second gear and rack pair being connected to the vehicle body positioning pin.

By using the second gear and rack pair as the positioning transmission assembly, a reduction in the height space occupied by the vehicle body positioning mechanisms and the flattening of the battery swap device are facilitated compared with other transmission assemblies.

In a preferred technical solution of the battery charging and swapping station described above, the vehicle body positioning mechanism further includes a positioning guide assembly via which the vehicle body positioning pin is connected to the hoisting platform, the positioning guide assembly being configured to provide guidance during a lifting movement of the vehicle body positioning pin relative to the hoisting platform.

With the provision of the positioning guide assembly, the movement accuracy of the vehicle body positioning pins during lifting can be improved.

In a preferred technical solution of the battery charging and swapping station described above, some of the vehicle body positioning mechanisms are shared by several groups.

Since some of the vehicle body positioning pins are shared by several groups, the number of vehicle body positioning pins provided can decrease while the compatibility of the battery swap device is improved.

In a preferred technical solution of the battery charging and swapping station described above, the hoistable battery swap portion includes three vehicle body positioning mechanisms, which are distributed at three corners of the hoisting platform.

With the provision of the three vehicle body positioning mechanisms at the three corners of the hoisting platform, a distance between the vehicle body positioning mechanisms can be maximized, and the positioning accuracy can be improved.

In a preferred technical solution of the battery charging and swapping station described above, each battery compartment is provided with a plurality of battery limiting members, which are divided into multiple groups to limit traction batteries of different specifications.

With the provision of the plurality of battery limiting members inside the battery compartment, traction batteries having different outline dimensions can be limited, the compatibility of the battery compartment with the traction batteries of different outline dimensions can thus be improved, and the accuracy of placing the traction batteries inside the battery compartment can be improved.

In a preferred technical solution of the battery charging and swapping station described above, the battery limiting member is a bar-shaped limiting block, which is fixedly connected to a part of the frame that constitutes the respective battery compartment.

The traction battery is limited by using the bar-shaped limiting block, so that the structure is not only simple and easy to implement, but also has a good limiting effect.

In a preferred technical solution of the battery charging and swapping station described above, the plurality of battery limiting members are divided into two groups, and a plurality of battery limiting members in each group are arranged nearby two corners on one diagonal of the battery compartment.

By arranging the battery limiting members in each group nearby the two corners on one diagonal of the battery compartment, the opposite corners of the battery can be limited to improve the limiting accuracy.

In a preferred technical solution of the battery charging and swapping station described above, each group includes three battery limiting members, two of which are located at the same corner and arranged perpendicular to each other, and the other of which is arranged at the other corner and extends in a width direction of an inlet of the battery compartment.

In a preferred technical solution of the battery charging and swapping station described above, each battery compartment is further provided with one battery positioning portion configured to be dockable with traction batteries of different specifications.

With the provision of the battery positioning portion, traction batteries of different specifications and models can be initially positioned by utilizing the battery positioning portion, the positioning accuracy of the traction batteries can be improved, and the compatibility of the battery compartment with the traction batteries of different specifications can be improved.

In a preferred technical solution of the battery charging and swapping station described above, the battery positioning portion is a battery positioning pin, which is arranged on the frame on an opposite side of the inlet of the battery compartment and dockable with a positioning hole in the traction battery.

In a preferred technical solution of the battery charging and swapping station described above, the electrical connection portion includes an electrical connector, an electrical connection driving assembly and an electrical connection transmission assembly, the electrical connection driving assembly being fixedly connected to a part of the frame corresponding to the battery compartment and being connected to the electrical connection transmission assembly, the electrical connection transmission assembly being connected to the electrical connector, and the electrical connection driving assembly being configured to drive the electrical connection transmission assembly to operate such that the electrical connector performs a lifting movement relative to the frame.

With the provision of the electrical connection driving assembly and the electrical connection transmission assembly, the automatic lifting of the electrical connector can be achieved, and the degree of automation of the battery compartment and the efficiency of battery swap can be improved.

In a preferred technical solution of the battery charging and swapping station described above, the electrical connection transmission assembly includes a fourth lead screw and nut pair and a first connection member, a lead screw of the fourth lead screw and nut pair being mounted on the frame and arranged in a vertical direction, the electrical connection driving assembly being in transmission connection with the lead screw of the fourth lead screw and nut pair, a nut of the fourth lead screw and nut pair being connected to the first connection member, and the electrical connector being fixedly connected to the first connection member.

In a preferred technical solution of the battery charging and swapping station described above, the electrical connection portion further includes an electrical connection guide mechanism via which the first connection member is connected to the frame, the electrical connection guide mechanism being configured to provide guidance during the lifting movement of the electrical connector relative to the frame.

With the provision of the electrical connection guide mechanism, guidance can be provided during the lifting of the electrical connector, and the movement accuracy of the electrical connector can be improved.

In a preferred technical solution of the battery charging and swapping station described above, each battery compartment is provided with two electrical connection portions, which are respectively connected to the frame on two opposite sides of the battery compartment.

In a preferred technical solution of the battery charging and swapping station described above, each battery compartment is further provided with a plurality of liquid-cooling connection portions, each of which is configured to be connectable to traction batteries of at least one specification to cool the traction batteries during charging of the traction batteries.

With the provision of the plurality of liquid-cooling connection portions, batteries of various specifications can be cooled, and the compatibility of the battery compartment can be improved.

In a preferred technical solution of the battery charging and swapping station described above, the liquid-cooling connection portion includes a liquid-cooling connector, a liquid-cooling connection driving assembly and a liquid-cooling connection transmission assembly, the liquid-cooling connection driving assembly being fixedly connected to a part of the frame corresponding to the battery compartment and being connected to the liquid-cooling connection transmission assembly, the liquid-cooling connection transmission assembly being connected to the liquid-cooling connector, and the liquid-cooling connection driving assembly being configured to drive the liquid-cooling connection transmission assembly to operate such that the liquid-cooling connector performs a lifting movement relative to the frame.

With the provision of the liquid-cooling connection driving assembly and the liquid-cooling connection transmission assembly, the automatic lifting of the liquid-cooling connector can be achieved, and the degree of automation of the battery compartment and the efficiency of battery swap can be improved.

In a preferred technical solution of the battery charging and swapping station described above, the liquid-cooling connection transmission assembly includes a fifth lead screw and nut pair and a second connection member, a lead screw of the fifth lead screw and nut pair being mounted on the frame and arranged in a vertical direction, the liquid-cooling connection driving assembly being in transmission connection with the lead screw of the fifth lead screw and nut pair, a nut of the fifth lead screw and nut pair being connected to the second connection member, and the liquid-cooling connector being fixedly connected to the second connection member.

In a preferred technical solution of the battery charging and swapping station described above, the liquid-cooling connection portion further includes a liquid-cooling connection guide mechanism via which the second connection member is connected to the frame, the liquid-cooling connection guide mechanism being configured to provide guidance during the lifting movement of the liquid-cooling connector relative to the frame.

With the provision of the liquid-cooling connection guide mechanism, guidance can be provided during the lifting of the liquid-cooling connector, and the lifting accuracy of the liquid-cooling connector can be improved.

In a preferred technical solution of the battery charging and swapping station described above, each battery compartment is provided with two liquid-cooling connection portions, which are connected to parts of the frame on the same side of the battery compartment.

### Brief Description of the Drawings

The disclosure will be described below with reference to the accompanying drawings. In the figures:
FIG. 1 is a layout view of a battery charging and swapping station according to the disclosure;
FIG. 2 is an assembly view of a battery swap platform and a battery swap device of the battery charging and swapping station according to the disclosure;
FIG. 3 is a partial enlarged view of part A in FIG. 2;
FIG. 4 is an exploded view of a movement mechanism, a guide pusher and a pusher guide mechanism according to the disclosure;
FIG. 5 is a front structural view of the battery swap device according to the disclosure;
FIG. 6 is a bottom structural view of the battery swap device according to the disclosure;
FIG. 7 is a partial enlarged view of part B in FIG. 6;
FIG. 8 is an assembly view of a hoisting driving mechanism and a hoisting transmission mechanism according to the disclosure;
FIG. 9 is an assembly view of a lifting mechanism and a locking/unlocking mechanism according to the disclosure;
FIG. 10 is an assembly view of a translation mechanism, the lifting mechanism and the locking/unlocking mechanism according to the disclosure;
FIG. 11 is an assembly view of the lifting mechanism and the locking/unlocking mechanism with the translation mechanism removed according to the disclosure;
FIG. 12 is a schematic assembly view of a vehicle body positioning mechanism according to the disclosure;
FIG. 13 is a structural view of a battery rack according to the disclosure;
FIG. 14 is a front view of the battery rack according to the disclosure;
FIG. 15 is a partial enlarged view of part C in FIG. 13 according to the disclosure;
FIG. 16 is a top assembly view of an electrical connection portion and a liquid-cooling connection portion according to the disclosure; and
FIG. 17 is a bottom assembly view of the electrical connection portion and the liquid-cooling connection portion according to the disclosure.

### List of reference signs

100. Battery swap platform; 110. Platform body; 111. Support; 112. Track; 120. Vehicle positioning portion; 121. V-shaped roller group; 122. I-shaped roller group; 123. Front wheel centering mechanism; 124. Rear wheel centering mechanism; 130. Battery guide portion; 131. Movement mechanism; 1311. Pusher driving assembly; 1312. Pusher transmission assembly; 13121. First lead screw and nut pair; 13122. Connecting plate; 132. Guide pusher; 133. Pusher guide mechanism; 134. Fixed guide member;

200. Battery swap device; 210. Bottom frame; 220. Travel portion; 221. Travel mechanism; 2211. Travel driving assembly; 2212. Travel transmission assembly; 222. Travel wheel; 231. Hoisting platform; 2311. Elongated hole; 2312. First vertical plate; 2313. Second vertical plate; 2314. First transverse plate; 2315. Fifth vertical plate; 2316. Sixth vertical plate; 2317. Fourth transverse plate; 2318. Mounting seat; 232. Locking/unlocking mechanism; 2321. Locking/unlocking head; 2322. Locking/unlocking driving assembly; 233. Hoisting driving mechanism; 234. Hoisting transmission mechanism; 2341. Housing; 2342. Rigid chain body; 2343. Connecting member; 235. Translation mechanism; 2351. Translation driving assembly; 2352. Translation transmission assembly; 236. Translation guide mechanism; 237. Lifting mechanism; 2371. Lifting driving assembly; 2372. Lifting transmission assembly; 2373. Connection assembly; 23731. Third vertical plate; 23732. Fourth vertical plate; 23733. Second transverse plate; 23734. Third transverse plate; 238. Lifting guide mechanism; 239. Vehicle body positioning mechanism; 2391. Positioning driving assembly; 2392. Positioning transmission assembly; 2393. Vehicle body positioning pin; 2394. Positioning guide assembly;

300. Battery rack; 310. Frame; 311. Frame body; 312. Supporting member; 320. Battery compartment; 330. Electrical connection portion; 331. Electrical connector; 332. Electrical connection driving assembly; 333. Electrical connection transmission assembly; 3331. Fourth lead screw and nut pair; 3332. First connection member; 334. Electrical connection guide mechanism; 335. Electrical lead-out end; 340. Liquid-cooling connection portion; 341. Liquid-cooling connector; 342. Liquid-cooling connection driving assembly; 343. Liquid-cooling connection transmission assembly; 3431. Fifth lead screw and nut pair; 3432. Second connection member; 344. Liquid-cooling connection guide mechanism; 345. Liquid-cooling lead-out end; 350. Battery limiting member; 360. Battery positioning portion.

### Detailed Description of Embodiments

Preferred implementations of the disclosure will be described below with reference to the accompanying drawings. Those skilled in the art should understand that these implementations are only used to explain the technical principles of the disclosure, and are not intended to limit the scope of protection of the disclosure.

It should be noted that in the description of the disclosure, the terms, such as "middle", "upper", "lower", "left", "right", "vertical", "horizontal", "inner" and "outer" that indicate directions or positional relationships, are based on the directions or positional relationships shown in the accompanying drawings only for convenience of description, do not indicate or imply that the apparatus or element must have a specific orientation or be constructed and operated in a specific orientation, and therefore cannot be construed as limiting the disclosure. In addition, the terms "first", "second", "third", "fourth", "fifth" and "sixth" are merely for descriptive purposes and should not be construed as indicating or implying relative importance.

In addition, it should also be noted that in the description of the disclosure, the terms "mount", "connected to each other" and "connection" should be interpreted in a broad sense unless explicitly defined and limited otherwise. For example, a connection may be a fixed connection, a detachable connection or an integral connection; or may be a direct connection, an indirect connection by means of an intermediary, or internal communication between two elements. Those skilled in the art can understand specific meanings of the above terms in the disclosure according to specific situations.

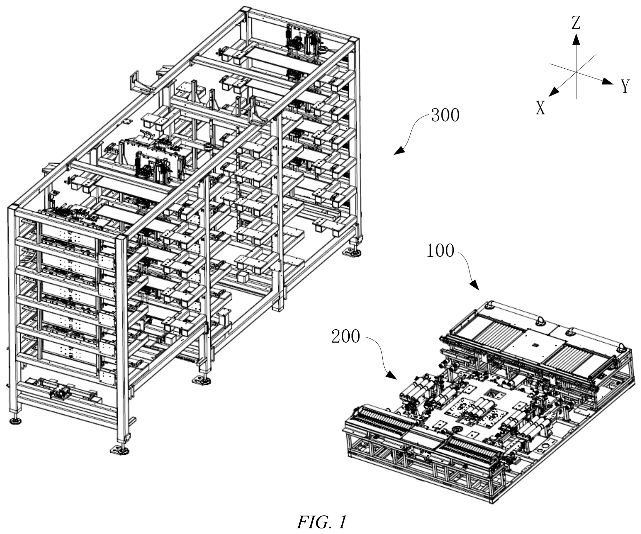

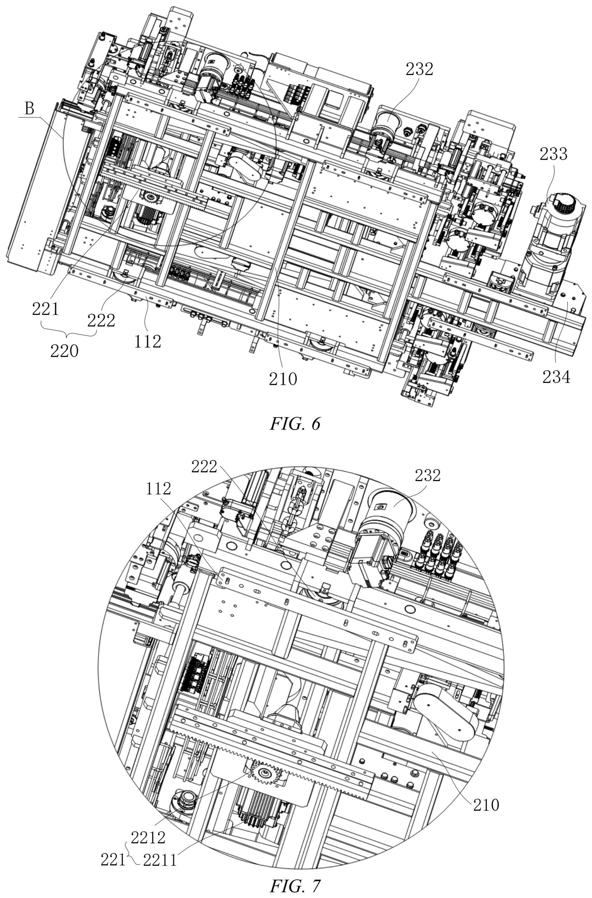

First, a battery charging and swapping station of the disclosure is described with reference to FIGS. 1-2, 5-6 and 13.

As shown in FIGS. 1-2, 5-6 and 13, the battery charging and swapping station of the disclosure includes a battery swap platform 100, a battery swap device 200 and a battery rack 300, in order to solve the problem of poor overall compatibility of a conventional battery charging and swapping station.

The battery swap platform 100 includes a platform body 110 and a vehicle positioning portion 120 arranged on the platform body 110. The platform body 110 can carry a vehicle with a battery to be swapped, and the vehicle positioning portion 120 can position different sizes of vehicles with a battery to be swapped.

The battery swap device 200 is arranged below the platform body 110, and the battery swap device 200 includes a bottom frame 210, a travel portion 220 and a hoistable battery swap portion. The travel portion 220 is connected to the bottom frame 210 and can drive the bottom frame 210 to move relative to the platform body 110 in a length direction of the vehicle with a battery to be swapped (i.e., in the X direction in FIG. 1, the same below), and the hoistable battery swap portion is liftably arranged on an upper portion of the bottom frame 210 and can be docked with chassis of vehicles with a battery to be swapped that have different battery mounting positions, and swap traction batteries.

The battery rack 300 includes a frame 310. The frame 310 is provided with a plurality of battery compartments 320. At least one battery compartment 320 is provided with a plurality of electrical connection portions 330, and each electrical connection portion 330 can be connected to traction batteries of one specification so as to charge the traction batteries.

During application of the above technical solution, the vehicle positioning portion 120 can position different sizes of vehicles with a battery to be swapped that are carried on the platform body 110. The battery swap device 200 adjusts, by means of the travel portion 220, the positions of the bottom frame 210 and the hoistable battery swap portion relative to the platform body 110 in the X direction depending on the position where the traction battery of the vehicle with a battery to be swapped is mounted on the chassis, such that the hoistable battery swap portion can be smoothly docked with the chassis of the vehicle and remove the traction battery and mount a traction battery. The removed traction battery or the traction battery to be mounted is transferred by means of a transfer mechanism (an electric roller or, for example, a stacking machine) and the battery rack 300. At least one battery compartment 320 of the battery rack 300 is provided with a plurality of electrical connection portions 330, such that the at least one battery compartment 320 can store and charge traction batteries of various specifications, so as to provide traction batteries for vehicles with a battery to be swapped that are provided with batteries of different specifications.

Therefore, with the above configuration, the overall compatibility of the battery charging and swapping station can be improved, such that the battery charging and swapping station can be compatible with batteries of different specifications and different vehicle models, thereby improving the efficiency of the battery charging and swapping station and reducing the research and development costs of enterprises. Specifically, the vehicle positioning portion 120 can position different sizes of vehicles with a battery to be swapped, so that the compatibility of the battery swap platform 100 can be improved, and the battery swap platform 100 can thus be compatible with different sizes of vehicle models. The travel portion 220 of the battery swap device 200 drives the bottom frame 210 to move relative to the platform body 110 in the length direction of the vehicle with a battery to be swapped, so that the compatibility of the battery swap device 200 can be improved, and the battery swap device 200 can thus be compatible with various vehicle models having different battery mounting positions; and such a configuration is simple and effective and does not increase the structural complexity of the battery swap device 200. The battery compartment 320 is provided with the plurality of electrical connection portions 330, so that the compatibility of the battery rack 300 can be improved, the battery compartment 320 can thus be compatible with traction batteries of various specifications; and such a configuration does not occupy an additional space (e.g., compared with the provision of a plurality of battery racks for compatibility with batteries of different specifications) and does not affect at all the spatial layout and site selection of the battery charging and swapping station. In summary, the technical solution of the disclosure has a high feasibility, requires little modification to a conventional battery charging and swapping station, has low modification costs, and is very suitable for upgrading and reconstruction of the conventional battery charging and swapping station.

A preferred implementation of the disclosure will be described below with reference to FIGS. 1 to 17.

Referring first to FIGS. 1 to 4, in a preferred implementation, the battery swap platform 100 includes a platform body 110, a vehicle positioning portion 120, and a battery guide portion 130.

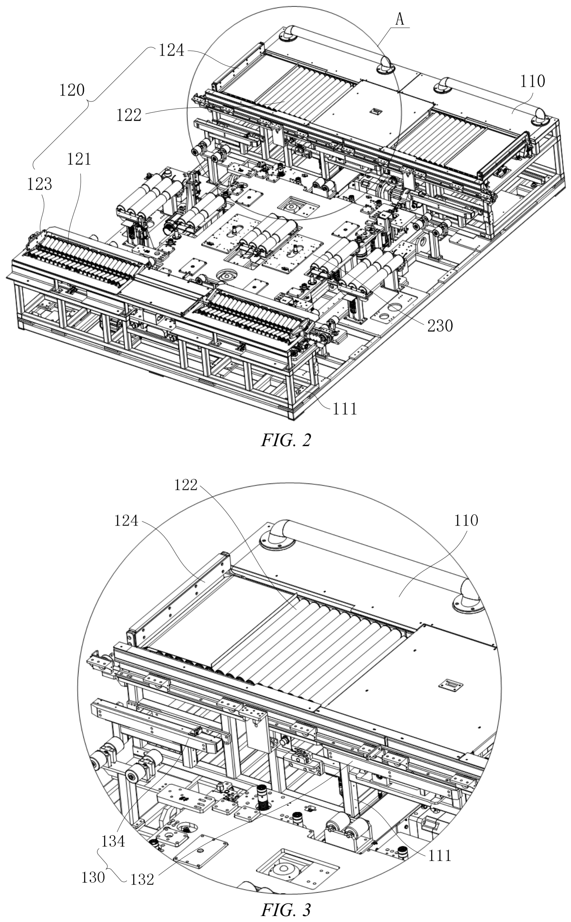

As shown in FIG. 2, the battery swap platform 100 is constructed by a support 111 and steel plates laid on an upper portion of the support 111, the battery swap platform 100 is provided with the vehicle positioning portion 120 at two ends in the length direction of the vehicle, and is provided with a closable door in the middle (the closable door is omitted for illustrating the battery swap device 200), a mounting space is formed between the closable door and the support 111 below the closable door, and the whole battery swap device 200 is mounted in the mounting space.

The vehicle positioning portion 120 includes V-shaped roller groups 121 and I-shaped roller groups 122 for front and rear positioning of the vehicle with a battery to be swapped, and front wheel centering mechanisms 123 and rear wheel centering mechanisms 124 for centering the vehicle with a battery to be swapped. Specifically, the V-shaped roller group 121 can position one of a front wheel and a rear wheel of the vehicle with a battery to be swapped, and the I-shaped roller group 122 can support the other of the front wheel and the rear wheel for vehicles with a battery to be swapped that have different wheelbases. In the disclosure, the V-shaped roller group 121 is configured to position the front wheel of the vehicle with a battery to be swapped, and the I-shaped roller group 122 is configured to support the rear wheel of the vehicle with a battery to be swapped. Specific structures of the V-shaped roller group 121 and the I-shaped roller group 122 are common general knowledge in the art and will not be described in detail in the disclosure. Preferably, the overall length of the I-shaped roller group 122 in the disclosure is increased to enable the I-shaped roller group 122 to adapt to vehicle models having different wheelbases. More specifically, the extended length of the I-shaped roller group 122 in the length direction of the vehicle with a battery to be swapped can be compatible with a wheelbase range of 2700-3300 mm, which is sufficient to cover the wheelbases of most vehicle models on the market.

Both the front wheel centering mechanism 123 and the rear wheel centering mechanism 124 can center vehicles with a battery to be swapped that have different widths. In the disclosure, the front wheel centering mechanisms 123 and the rear wheel centering mechanisms 124 are respectively arranged at two ends of the V-shaped roller group 121 and the I-shaped roller group 122 in a width direction of the vehicle with a battery to be swapped (in the Y direction in FIG. 1, the same below), and the front wheel centering mechanisms 123 and the rear wheel centering mechanisms 124 each take the form of an external pusher mechanism. That is, a motor drives external pushers to move from the two ends to the middle by means of a transmission assembly, and the external pushers abut against outer sides of the wheels of the vehicle with a battery to be swapped and push the vehicle to move for centering. The specific structural forms of the front wheel centering mechanism 123 and the rear wheel centering mechanism 124 are common general knowledge in the art and will not be described in detail herein. Preferably, movement ranges of the front wheel centering mechanism 123 and the rear wheel centering mechanism 124 are increased (e.g., by increasing the length of the transmission assembly) in the disclosure, such that the front wheel centering mechanism 123 and the rear wheel centering mechanism 124 can be compatible with a vehicle width range of 860-2800 mm, which is sufficient to cover the widths of most vehicle models on the market.

In a possible battery swap process, the vehicle is reversed into the platform body 110 until the two rear wheels are supported on the I-shaped roller groups 122, and the two front wheels are sunk into the V-shaped roller groups 121, thereby positioning the vehicle in the length direction. Next, the front wheel centering mechanisms 123 and the rear wheel centering mechanisms 124 operate to push the front wheels and the rear wheels of the vehicle from the outside of the vehicle until all the external pushers come into contact with the wheels and a thrust reaches a certain threshold, thereby positioning the vehicle in the width direction. As a result, the positioning of the vehicle with a battery to be swapped on the parking platform is completed.

By lengthening the I-shaped roller groups 122, the wheelbase range with which the battery swap platform 100 can be compatible basically covers the wheelbases of all vehicle models, and the compatibility of the battery swap platform 100 with the wheelbases of the vehicles is improved. Moreover, such a configuration is simple and effective and only needs to lengthen the I-shaped roller groups 122 without increasing the structural complexity of the parking platform. By increasing the movement ranges of the centering mechanisms, the vehicle width range with which the battery swap platform 100 can be compatible basically covers all vehicle models, and the compatibility of the battery swap platform 100 with the widths of the vehicles is improved. Moreover, such a configuration is simple and effective and only needs to increase the movement distances of the centering mechanisms without increasing the structural complexity of the parking platform.

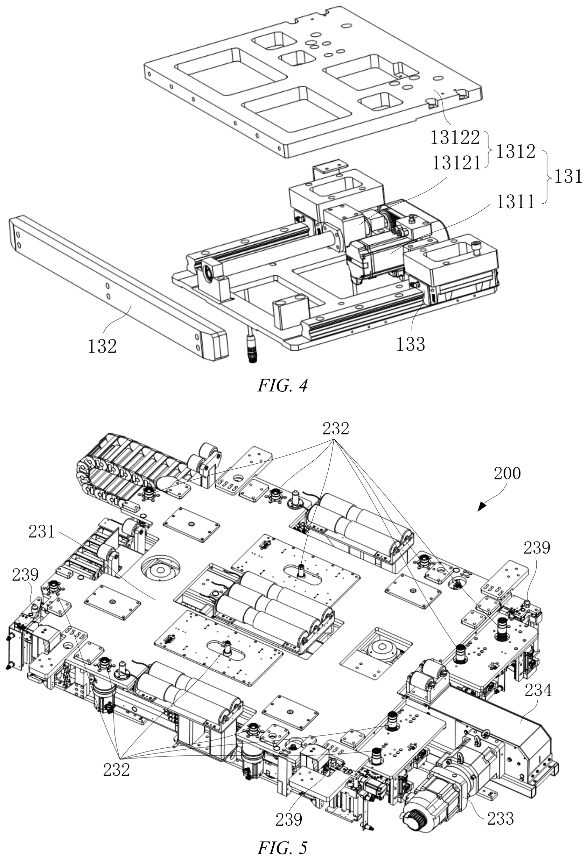

Next, referring to FIGS. 3 and 4, the battery guide portion 130 is mounted below the platform body 110 and can guide the traction battery to enter or exit the battery swap device 200. In the disclosure, the battery guide portion 130 includes a movement mechanism 131, a guide pusher 132, a pusher guide mechanism 133, and a fixed guide member 134. The movement mechanism 131 is arranged on the support 111 below the platform body 110 and connected to the guide pusher 132, and the movement mechanism 131 can move the guide pusher 132 relative to the platform body 110 in the length direction of the vehicle with a battery to be swapped, so as to push the traction battery and the battery swap device 200 to move synchronously during a movement of the battery swap device 200 carrying the traction battery in the length direction of the vehicle with a battery to be swapped. The pusher guide mechanism 133 can provide guidance during the movement of the guide pusher 132 relative to the platform body 110, and the fixed guide member 134 can provide guidance when the traction battery enters or exits the battery swap device 200 in the width direction of the vehicle with a battery to be swapped.

Specially, the movement mechanism 131 includes a pusher driving assembly 1311 and a pusher transmission assembly 1312. The pusher driving assembly 1311 is preferably a gear motor that is fixedly connected to the support 111 below the platform body 110 and is connected to the pusher transmission assembly 1312. Preferably, the pusher transmission assembly 1312 includes a first lead screw and nut pair 13121 and a connecting plate 13122. A lead screw of the first lead screw and nut pair 13121 is mounted on the support 111 and arranged in the length direction of the vehicle with a battery to be swapped, and the gear motor is in transmission connection with the lead screw of the first lead screw and nut pair 13121 by means of a transmission belt. A nut of the first lead screw and nut pair 13121 is fixedly connected to the connecting plate 13122, the connecting plate 13122 is fixedly connected to the guide pusher 132, and the guide pusher 132 extends in the width direction of the vehicle with a battery to be swapped and is fixedly connected to one end of the connecting plate 13122. The connecting plate 13122 is connected to the support 111 by means of the pusher guide mechanism 133.

The pusher guide mechanism 133 includes a sliding rail and a slider that cooperate with each other. The sliding rail is fixedly connected to the support 111, and the slider is fixedly connected to the connecting plate 13122. In the disclosure, the pusher guide mechanism 133 includes two sliding rails and two sliders. Each slider is cooperatively connected to one sliding rail, and the two sliding rails extend in the length direction of the vehicle with a battery to be swapped and are arranged on two sides of the movement mechanism 131.

The fixed guide member 134 is a guide bar, which extends in the width direction of the vehicle with a battery to be swapped and is fixedly connected to the support 111 below the platform body 110.

In the disclosure, two movement mechanisms 131 and two guide pushers 132 are provided respectively, the two movement mechanisms 131 are arranged on two sides of the battery swap device 200 in the length direction of the vehicle with a battery to be swapped, and each movement mechanism 131 is connected to one guide pusher 132. Four fixed guide members 134 are provided, and each movement mechanism 131 is provided with one fixed guide member 134 on either side of the vehicle with a battery to be swapped in the width direction.

In a possible battery swap process, the battery swap device 200 adjusts, by means of the travel portion 220, the positions of the bottom frame 210 and the hoistable battery swap portion relative to the platform body 110 in the X direction from their initial positions depending on the position where the traction battery of the vehicle with a battery to be swapped is mounted on the chassis, and at the same time, the two movement mechanisms 131 synchronously control the guide pushers 132 to move in the X direction and thus adjust the positions of the guide pushers 132 to provide clearance for the battery. Next, the hoistable battery swap portion ascends and is docked with the chassis of the vehicle, the used battery is removed, and then the hoistable battery swap portion descends to prepare to transfer the used battery to the battery rack 300. At this moment, the battery swap device 200 adjusts the positions of the bottom frame 210 and the hoistable battery swap portion by means of the travel portion 220, such that the bottom frame 210 and the hoistable battery swap portion are moved back to their initial positions in the X direction, and at the same time, the movement mechanisms 131 control the guide pushers 132 to move in the X direction, such that the guide pushers 132 push the used battery to move synchronously with the bottom frame 210 and the hoistable battery swap portion. After being moved in place, the used battery is transferred to the battery rack 300 under the guidance of the guide pushers 132 and the guide bars. Thereafter, a fully-charged battery is transferred to the hoistable battery swap portion and then mounted to the chassis of the vehicle with a battery to be swapped by means of an opposite movement process of the used battery.

With the provision of the battery guide portion 130, the battery can be guided to enter or exit the battery swap device 200 to improve the accuracy and the success rate of battery swap. With the provision of the movable guide pusher 132, in addition to guiding the battery to enter or exit the battery swap platform 100, the battery guide portion 130 can push the battery to move during the movement of the battery swap device 200 to achieve linkage with the movement of the battery swap device 200, so as to improve the accuracy of battery swap and the battery transfer consistency of the battery swap process and reduce the control complexity. With the provision of the pusher guide mechanism 133, guidance can be provided during the movement of the guide pusher 132 to improve the movement accuracy. With the provision of one movement mechanism 131 and one guide pusher 132 on either side of the battery swap device 200, the battery can be pushed in two directions to improve the accuracy of battery swap. With the provision of the fixed guide member 134, the battery can be guided as the battery enters or exits the battery swap device 200, to increase a guide range and improve the guide accuracy.

Of course, the above configuration of the battery swap platform 100 is merely a preferred implementation, but the configuration of the battery swap platform 100 is not limited to this implementation, and those skilled in the art may adjust the configuration according to specific applications.

By way of example, although the above implementation is described by taking an example in which the V-shaped roller group 121 is used for positioning the front wheel of the vehicle with a battery to be swapped and the I-shaped roller group 122 is used for supporting the rear wheel of the vehicle with a battery to be swapped, such a configuration is not unique, those skilled in the art may adjust the arrangement positions of the two roller groups and use the V-shaped roller group 121 for positioning the rear wheel and the I-shaped roller group 122 for positioning the front wheel. Of course, those skilled in the art may replace the V-shaped roller group 121 and/or the I-shaped roller group 122 with structures in other forms as long as vehicles having different wheelbases can be positioned in the length direction. For example, the I-shaped roller group 122 may be configured as a plurality of shorter I-shaped rollers which are serially connected in the X direction. For another example, the I-shaped roller group 122 may be configured to move relative to the platform body 110 in the X direction to adapt to the vehicles having different wheelbases, but this will inevitably increase the structural complexity of the battery swap platform 100.

For still another example, although the above implementation is described in conjunction with the movements of the front wheel centering mechanism 123 and the rear wheel centering mechanism 124 from outside to inside, this implementation is merely exemplary, and those skilled in the art may adjust the movement mode of the two centering mechanisms, for example, adjusting then to move from inside to outside, that is, pushing the vehicle toward the outside from the inner sides of the wheels. Moreover, the specific structural forms of the front wheel centering mechanism 123 and the rear wheel centering mechanism 124 are not limited in the disclosure, and any structure capable of centering the vehicle can be applied to the disclosure, for example, configuring the pushers to simultaneously push the front wheel and the rear wheel on the same side to perform the centering, or changing a driving form of the pushers, the structures of the pushers, etc., these changes do not deviate from the principles of the disclosure.

For yet another example, a value range of wheelbases with which the length of the I-shaped roller group 122 can be compatible and a value range of widths with which the front wheel centering mechanism 123 and the rear wheel centering mechanism 124 can be compatible are merely preferred implementations, and those skilled in the art may adjust these ranges to allow the disclosure to be applicable to more specific applications.

For a further example, the specific configuration of the battery guide portion 130 is not unique and may be adjusted by those skilled in the art. For example, the battery guide portion 130 may be provided with only the movement mechanisms 131 and the guide pushers 132, or may be provided with only the fixed guide members 134. Alternatively, the movement mechanism 131 may be replaced with an electric cylinder or an electric pusher. Alternatively, the first lead screw and nut pair 13121 in the pusher transmission assembly 1312 may be replaced with a gear and rack pair, a gear and chain pair, etc. Alternatively, it is possible that no pusher guide mechanism 133 is provided, or that the sliders and the sliding rails are exchanged in positions, or that the sliders and the sliding rails are replaced with guide rods and sliding rings, etc. Alternatively, the number of movement mechanisms 131, the number of guide pushers 132 and the number of fixed guide members 134 may be increased or decreased.

In addition, it is also possible that no battery guide portion 130 is provided, and the movement of the traction battery in the X direction is achieved by other methods, for example, by providing a battery positioning pin on the hoistable battery swap portion. Of course, the above configuration may cause problems, such as the battery swap device 200 having a complicated structure, and the battery positioning pin being damaged.

Referring next to FIGS. 5 to 7, in a preferred implementation, the battery swap device 200 includes a bottom frame 210, a travel portion 220 and a hoistable battery swap portion (not marked in the figures). The bottom frame 210 is formed by welding a steel structure, and the travel portion 220 and the hoistable battery swap portion are both connected to the bottom frame 210. The travel portion 220 includes a travel mechanism 221 and a travel wheel 222. The travel mechanism 221 is connected to the bottom frame 210, and the travel mechanism 221 can drive the bottom frame 210 to move in the length direction of the vehicle with a battery to be swapped. The travel wheel 222 is arranged on the bottom frame 210, and the travel wheel 222 can assist in the movement of the bottom frame 210.

Specifically, the travel mechanism 221 includes a travel driving assembly 2211 and a travel transmission assembly 2212. The travel driving assembly 2211 is connected to the travel transmission assembly 2212, one of the travel driving assembly 2211 and the travel transmission assembly 2212 is fixedly connected to the bottom frame 210, and the other thereof is fixedly connected to the ground of the battery charging and swapping station or the support 111 below the platform body 110. Preferably, in the disclosure, the travel driving assembly 2211 is a gear motor fixedly connected to the bottom frame 210. The travel transmission assembly 2212 is a first gear and rack pair. A gear of the first gear and rack pair is connected to an output end of the gear motor, and a rack of the first gear and rack pair extends in the X direction and is fixedly connected to the support 111 below the platform body 110.

A plurality of travel wheels 222 are provided, and each travel wheel 222 is mounted on the bottom frame 210. A track 112 is further arranged on the support 111 below the platform body 110, and the travel wheels 222 are rollably arranged on the track 112.

When the battery swap device 200 needs to be moved, the gear motor drives the gear to rotate, and the gear rolls along the rack, thereby moving the bottom frame 210 in the X direction. During the movement, the travel wheels 222 roll on the track 112 to assist in the movement of the bottom frame 210.

With the provision of the travel mechanism 221, automatic control of the battery swap device 200 can be achieved to improve the control accuracy and the efficiency of battery swap. With the provision of the travel wheel 222, the battery swap device 200 can be assisted in movement to reduce the resistance during the movement. With the provision of the track 112, the travel wheel 222 can be guided to reduce the rolling resistance of the travel wheel 222.

Referring to FIG. 5, the hoistable battery swap portion includes a hoisting platform 231, a plurality of locking/unlocking mechanisms 232, a hoisting driving mechanism 233 and a hoisting transmission mechanism 234. The hoisting platform 231 is in a shape of a flat plate, which can carry the traction battery. The hoisting driving mechanism 233 is connected to the hoisting transmission mechanism 234, the hoisting transmission mechanism 234 is connected to the hoisting platform 231, and the hoisting driving mechanism 233 can drive the hoisting transmission mechanism 234 to operate such that the hoisting platform 231 performs a lifting movement relative to the bottom frame 210. The plurality of locking/unlocking mechanisms 232 are arranged on the hoisting platform 231 and can adapt to traction batteries having different fastener arrangement positions.

Referring to FIGS. 5-6 and 8, the hoisting driving mechanism 233 includes a motor and a speed reducer, and the hoisting transmission mechanism 234 is a rigid chain lifting mechanism. The rigid chain lifting mechanism includes a housing 2341 provided with a sliding channel, a rigid chain body 2342 slidably arranged in the sliding channel, and a power transmission member arranged inside the housing 2341 and connected to the rigid chain body 2342. The housing 2341 is fixedly connected to the bottom frame 210 and extends partially out of the hoisting platform 231, the power transmission member is located at a portion of the housing 2341 extending out of the hoisting platform 231, the motor is connected to the speed reducer, and the speed reducer is fixedly connected to the portion of the housing 2341 extending out of the hoisting platform 231 and is connected to the power transmission member. After the connection is completed, the motor and the speed reducer are coaxial, and their axes are perpendicular to a sliding direction of the rigid chain body 2342 inside the housing 2341. One end of the rigid chain body 2342 extends out of the housing 2341 and is connected to a connecting member 2343, and the connecting member 2343 is fixedly connected to the hoisting platform 231. Preferably, two separate sliding channels are arranged inside the housing 2341, the two sliding channels are arranged side by side and both extend in the length direction of the vehicle with a battery to be swapped, and the two sliding channels have different lengths in the length direction of the vehicle with a battery to be swapped. One rigid chain body 2342 and one power transmission member are arranged in each sliding channel, and an output end of the speed reducer is connected to both the two power transmission members. In the disclosure, a power driving member is a driving gear, and a connection method for the power driving member and the rigid chain body 2342 and the operation principle thereof are both conventional means in the art, which will not be described in detail herein.

After configuration, the two sliding channels extend to a lower side of the hoisting platform 231, and two connecting members 2343 are connected to a lower surface of the hoisting platform 231 one after the other in the length direction of the vehicle with a battery to be swapped. When it is necessary to rise the hoisting platform 231, the hoisting driving mechanism 233 is started for operation, power of the motor is transmitted to the power transmission members by means of the speed reducer, the power transmission members drive the rigid chain bodies 2342 to slide along the sliding channels, and the rigid chain bodies 2342 push the two connecting members 2343 to ascend vertically, thus raising the hoisting platform 231.

Furthermore, in order to ensure the stability of the hoisting process, a hoisting guide mechanism, for example, a scissor mechanism, may also be arranged between the bottom frame 210 and the hoisting platform 231. Such a configuration is conventional and will not be described in detail in the disclosure.

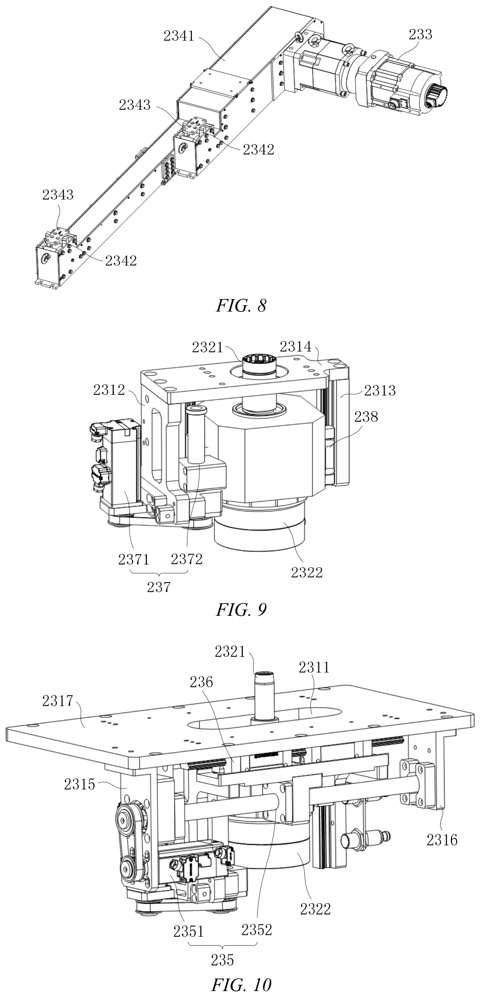

Referring to FIGS. 5 and 9, the locking/unlocking mechanism 232 includes a locking/unlocking head 2321 and a locking/unlocking driving assembly 2322. The locking/unlocking driving assembly 2322 is connected to the locking/unlocking head 2321 and can drive the locking/unlocking head 2321 to rotate, and the locking/unlocking head 2321 can be docked with a fastener on the traction battery. Preferably, some of the locking/unlocking driving assemblies 2322 include a motor and a speed reducer, and some of the locking/unlocking driving assemblies 2322 are direct drive motors (referred to as DD motors).

By locating the hoisting driving mechanism 233 on an outer side of the hoisting platform 231, the hoisting driving mechanism 233 can be prevented from occupying an excessive height space when being located below the hoisting platform 231, decreasing the overall height of the battery swap device 200, so that when the vehicle needs to be lifted, a vehicle lifting height is decreased or even vehicle lifting is omitted to improve the experience of battery swap. Alternatively, when it is necessary to arrange the battery swap device 200 below the battery swap platform 100, the height at which the battery swap platform 100 is arranged is decreased, or the excavation depth of the foundation below the battery swap platform 100 is decreased, and thus the difficulty of site selection is reduced. By configuring an output axis direction of the hoisting driving mechanism 233 to be perpendicular to the sliding direction of the rigid chain body 2342, the space occupied by the hoisting driving mechanism 233 can be reduced, and the battery swap device 200 has a compact size. With the provision of the two separate sliding channels, the driving stability of the rigid chain lifting mechanism can be improved, and the operating stability of the battery swap device 200 can be improved. The two sliding channels have different lengths, so that support points of the rigid chain lifting mechanism can be spaced apart fully, and the lifting stability of the hoisting platform 231 can be improved. Since some of the locking/unlocking driving assemblies 2322 take the form of a DD motor, and the DD motor provides a low-speed and large-torque output itself and is directly connected to a load without the need for connection to the speed reducer, the occupied longitudinal space can be reduced, facilitating a flattening design of the battery swap device 200 and avoiding structural interference, the device structure is simplified, and costs can also be saved.

Referring to FIG. 9, the hoistable battery swap portion further includes a lifting mechanism 237 and a lifting guide mechanism 238. Some of the locking/unlocking mechanisms 232 are connected to the hoisting platform 231 by means of the lifting mechanism 237 and the lifting guide mechanism 238. The lifting mechanism 237 is mounted on the hoisting platform 231 and can drive the lifting movement of the locking/unlocking mechanisms 232 connected thereto relative to the hoisting platform 231. The lifting guide mechanism 238 can provide guidance when the lifting mechanism 237 drive the lifting movement of the locking/unlocking mechanisms 232 relative to the hoisting platform 231.

Specifically, the lifting mechanism 237 includes a lifting driving assembly 2371 and a lifting transmission assembly 2372. The lifting driving assembly 2371 is mounted on the hoisting platform 231 and is connected to the lifting transmission assembly 2372, and the lifting transmission assembly 2372 is connected to the locking/unlocking mechanism 232. Preferably, the lifting driving assembly 2371 is a gear motor, and the lifting transmission assembly 2372 is a second lead screw and nut pair. The gear motor is fixedly mounted on one side of a first vertical plate 2312, a lead screw of the second lead screw and nut pair is arranged in the vertical direction and fixedly connected to the other side of the first vertical plate 2312, an output end of the gear motor is connected to the lead screw by means of a transmission belt, and a nut of the second lead screw and nut pair is fixedly connected to the locking/unlocking mechanism 232.

The lifting guide mechanism 238 preferably includes a sliding rail and a slider that cooperate with each other. Two sliding rails and two sliders are provided, in which one sliding rail is arranged on the first vertical plate 2312 and extends in the vertical direction, the other sliding rail is arranged on a second vertical plate 2313 and extends in the vertical direction, and the two sliders are fixedly connected to the locking/unlocking mechanism 232. The first vertical plate 2312 and the second vertical plate 2313 are both fixedly connected to a first transverse plate 2314, and are fixedly connected to the hoisting platform 231 by means of the first transverse plate 2314.

Under the drive of the gear motor, the nut of the second lead screw and nut pair performs a vertical lifting movement along the lead screw, and the locking/unlocking mechanism 232 performs the lifting movement under the drive of the nut and under the guidance of the lifting guide mechanism 238.

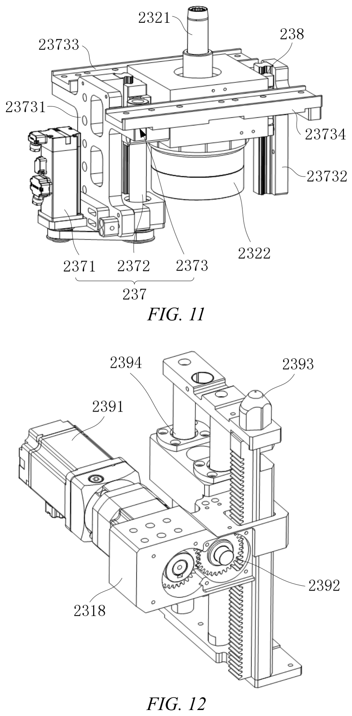

Referring to FIGS. 10 and 11, the hoistable battery swap portion further includes a translation mechanism 235 and a translation guide mechanism 236, and the lifting mechanism 237 partially connected to the locking/unlocking mechanism 232 is connected to the hoisting platform 231 by means of the translation mechanism 235 and the translation guide mechanism 236. The translation mechanism 235 is mounted on the hoisting platform 231 and can drive the lifting mechanism 237 connected thereto and the locking/unlocking mechanism 232 connected to the lifting mechanism 237 to horizontally move relative to the hoisting platform 231. The translation guide mechanism 236 can provide guidance when the translation mechanism 235 drives the lifting mechanism 237 and the locking/unlocking mechanism 232 to horizontally move relative to the hoisting platform 231.

Specifically, the translation mechanism 235 includes a translation driving assembly 2351 and a translation transmission assembly, and the lifting mechanism 237 further includes a connection assembly 2373. The translation driving assembly 2351 is mounted on the hoisting platform 231 and is connected to the translation transmission assembly, the translation transmission assembly is connected to the connection assembly 2373, and the lifting driving assembly 2371 is mounted on the connection assembly 2373. Preferably, the translation driving assembly 2351 is a gear motor, the translation transmission assembly is a third lead screw and nut pair, and the connection assembly 2373 includes a third vertical plate 23731, a fourth vertical plate 23732, a second transverse plate 23733 and a third transverse plate 23734. The gear motor is fixedly connected to one side of a fifth vertical plate 2315, a lead screw of the third lead screw and nut pair is arranged in a horizontal direction and fixedly mounted between the fifth vertical plate 2315 and a sixth vertical plate 2316, an output end of the gear motor is in transmission connection with the lead screw by means of a transmission belt, and a nut of the third lead screw and nut pair is fixedly connected to the third transverse plate 23734 of the connection assembly 2373. The fifth vertical plate 2315 and the sixth vertical plate 2316 are both fixedly connected to a fourth transverse plate 2317, and are fixedly connected to the hoisting platform 231 by means of the fourth transverse plate 2317.

The translation guide mechanism 236 preferably includes a sliding rail and a slider that cooperate with each other. Two sliding rails and two sliders are provided, in which the two sliding rails are fixedly mounted on the fourth transverse plate 2317 and extend in the horizontal direction, and the two sliders are fixedly connected to the second transverse plate 23733 and the third transverse plate 23734, respectively.

The lifting mechanism 237 connected to the translation mechanism 235 has the same structure as the lifting mechanism 237 described above except for the connection assembly 2373. The gear motor of the lifting assembly 237 is fixedly mounted on one side of the third vertical plate 23731, the lead screw of the second lead screw and nut pair is arranged in the vertical direction and fixedly connected to the other side of the third vertical plate 23731, the output end of the gear motor is connected to the lead screw by means of the transmission belt, and the nut of the second lead screw and nut pair is fixedly connected to the locking/unlocking mechanism 232. The lifting guide mechanism 238 is provided with two sliding rails and two sliders, in which one sliding rail is arranged on the third vertical plate 23731 and extends in the vertical direction, the other sliding rail is arranged on the fourth vertical plate 23732 and extends in the vertical direction, and the two sliders are respectively fixedly connected to the locking/unlocking mechanism 232. Two ends of the second transverse plate 23733 are connected to one side of the third vertical plate 23731 and one side of the fourth vertical plate 23732, respectively, two ends of the third transverse plate 23734 are connected to the other side of the third vertical plate 23731 and the other side of the fourth vertical plate 23732, respectively, and the third transverse plate 23734 and the fourth transverse plate 2317 are respectively fixedly connected to the two sliders of the translation guide mechanism 236.

Under the drive by the gear motor of the translation mechanism 235, the nut of the third lead screw and nut pair performs a horizontal movement along the lead screw, and the lifting mechanism 237 and the locking/unlocking mechanism 232 connected to the translation mechanism 235 perform the horizontal movement under the drive of the nut and under the guidance of the translation guide mechanism 236. In this case, the locking/unlocking head 2321 of the locking/unlocking mechanism 232 can be translated in an elongated hole 2311 in the hoisting platform 231. Under the drive of the gear motor of the lifting mechanism 237, the nut of the second lead screw and nut pair performs a vertical movement along the lead screw, and the locking/unlocking mechanism 232 connected to the lifting mechanism 237 performs the lifting movement under the drive of the nut and under the guidance of the lifting guide mechanism 238.

Referring again to FIG. 5 and on the basis of an orientation shown in FIG. 5, in the disclosure, a total of twelve locking/unlocking mechanisms 232 are arranged on the hoisting platform 231, where four locking/unlocking mechanisms 232 are arranged on a lower right side of the hoisting platform 231, and these four locking/unlocking mechanisms 232 are connected to only the lifting mechanism 237 and not connected to the translation mechanism 235, that is, these four locking/unlocking mechanisms 232 can only perform the lifting movement relative to the hoisting platform 231. Two locking/unlocking mechanisms 232 are arranged in the middle of the hoisting platform 231, and the two locking/unlocking mechanisms 232 are connected to both the lifting mechanism 237 and the translation mechanism 235 (the lifting mechanism 237 is connected to the locking/unlocking mechanisms 232, and the translation mechanism 235 is connected to the lifting mechanism 237), that is, the two locking/unlocking mechanisms 232 can both translate relative to the hoisting platform 231 and ascend and descend relative to the hoisting platform 231. The remaining six locking/unlocking mechanisms 232 are neither connected to the translation mechanism 235 nor to the lifting mechanism 237.

In a possible implementation, the twelve locking/unlocking mechanisms 232 can adapt to the traction batteries having different fastener arrangement positions. By way of example, the four locking/unlocking mechanisms 232 located on the lower right side of the hoisting platform 231 can adapt to fasteners on batteries of different specifications by means of separate lifting, the two locking/unlocking mechanisms 232 located in the middle of the hoisting platform 231 can adapt to the fasteners on the batteries of different specifications by means of translation and lifting, and the remaining six locking/unlocking mechanisms 232 are fixed in positions and can adapt to the fasteners on traction batteries of all specifications.

By configuring the plurality of locking/unlocking mechanisms 232 to adapt to the traction batteries having different fastener arrangement positions, the compatibility of the battery swap device 200 can be improved, and the battery swap device 200 can thus adapt to various traction batteries having different fastener arrangement positions. With the provision of the lifting mechanism 237, the locking/unlocking mechanism 232 can be driven by the lifting mechanism 237 to perform the lifting movement, different locking/unlocking mechanisms 232 are then controlled to participate in battery swap, so that the battery swap device 200 can match traction batteries of various specifications and sizes, and the compatibility of the battery swap device 200 can be improved. With the provision of the lifting driving assembly 2371 and the lifting transmission assembly 2372, automatic lifting control of the locking/unlocking mechanism 232 can be achieved, and the degree of automation and the efficiency of battery swap of the battery swap device 200 can be improved. With the provision of the lifting guide mechanism 238, the movement accuracy of the locking/unlocking mechanism 232 during lifting can be improved. With the additional provision of the translation mechanism 235, the lifting mechanism 237 and the locking/unlocking mechanism 232 can be driven to horizontally move to be aligned with the fasteners on the batteries of different specifications by means of the translation mechanism 235, the lifting mechanism 237 drives the lifting of the locking/unlocking mechanism 232, and different locking/unlocking mechanisms 232 are thus controlled to participate in battery swap, so that the battery swap device 200 can adapt to traction batteries of various specifications and sizes by means of the combination of the two mechanisms, and the compatibility of the battery swap device 200 can be improved significantly. With the provision of the translation driving assembly 2351 and the translation transmission assembly, automatic movement control of the lifting mechanism 237 and the locking/unlocking mechanism 232 can be achieved, and the degree of automation and the efficiency of battery swap of the battery swap device 200 can be improved. With the provision of the translation guide mechanism 236, the movement accuracy during a translation of the lifting mechanism 237 and the locking/unlocking mechanism 232 can be improved.

Referring to FIGS. 5 and 12, a plurality of vehicle body positioning mechanisms 239 are provided. The plurality of vehicle body positioning mechanisms 239 are divided into multiple groups to adapt to vehicles with a battery to be swapped that have different chassis positioning locations. Specifically, the vehicle body positioning mechanism 239 includes a positioning driving assembly 2391, a positioning transmission assembly 2392, a vehicle body positioning pin 2393 and a positioning guide assembly 2394. The positioning driving assembly 2391 is fixedly connected to the hoisting platform 231 and the positioning transmission assembly 2392, the positioning transmission assembly 2392 is connected to the vehicle body positioning pin 2393, and the positioning driving assembly 2391 can drive the positioning transmission assembly 2392 to operate such that the positioning transmission assembly 2392 drives a lifting movement of the vehicle body positioning pin 2393.

Preferably, the positioning driving assembly 2391 is a gear motor fixedly connected to a mounting seat 2318, and the positioning transmission assembly 2392 is a second gear and rack pair. A gear of the second gear and rack pair is in transmission connection with a further gear arranged at an output end of the positioning driving assembly 2391, and a rack of the second gear and rack pair is connected to the vehicle body positioning pin 2393. The positioning guide assembly 2394 is preferably a guide rod and a sliding ring that cooperate with each other. Two guide rod and two sliding rings are provided, in which the two guide rods are arranged in parallel in the vertical direction, the two guide rods and the racks are both mounted between two mounting bars, and the two sliding rings are fixed in the mounting seat 2318, such that the vehicle body positioning pin 2393 is connected to the mounting seat 2318 by means of the guide rods and the sliding rings.

In the disclosure, the hoistable battery swap portion includes three vehicle body positioning mechanisms 239. The three vehicle body positioning mechanisms 239 are distributed at three corners of the hoisting platform 231, and on the basis of the orientation shown in FIG. 5, the three vehicle body positioning mechanisms 239 are respectively located at a lower left corner, a lower right corner and an upper right corner of the hoisting platform 231. Preferably, the three vehicle body positioning mechanisms 239 are divided into at least two groups, and each group includes at least two vehicle body positioning mechanisms 239. In other words, some of the vehicle body positioning mechanisms 239 are shared by several groups. By way of example, the vehicle body positioning mechanisms 239 are divided into two groups, where the vehicle body positioning mechanisms 239 located at the lower left corner and the lower right corner of the hoisting platform 231 form one group, and the vehicle body positioning mechanisms 239 located at the lower left corner and the upper right corner of the hoisting platform 231 form one group.

During the process of docking the hoisting platform 231 with the vehicle body chassis, different vehicle body positioning mechanisms 239 are controlled to extend out depending on the vehicle models, and during the ascending of the hoisting platform 231, the vehicle body positioning pins 2393 in the vehicle body positioning mechanisms 239 are inserted into positioning holes in the chassis of the vehicle to achieve docking with the chassis of the vehicle.

With the provision of the plurality of vehicle body positioning mechanisms 239, the alignment of the battery swap device 200 with the vehicle body chassis can be achieved by using the docking of the plurality of vehicle body positioning mechanisms 239 with the chassis of different vehicles with a battery to be swapped, and the compatibility of the battery swap device 200 with the chassis of the vehicle can be improved. With the provision of the positioning driving assembly 2391 and the positioning transmission assembly 2392, automatic lifting of the vehicle body positioning pin 2393 can be achieved, and automatic control can be achieved, avoiding that the vehicle body positioning pin 2393 collides with the chassis of the vehicle and thus the battery swap device 200 and the chassis of the vehicle are damaged. By using the second gear and rack pair as the positioning transmission assembly 2392, a reduction in the height space occupied by the vehicle body positioning mechanisms 239 and the flattening of the battery swap device 200 are facilitated compared with other transmission assemblies. With the provision of the positioning guide assembly 2394, the movement accuracy of the vehicle body positioning pins 2393 during lifting can be improved. Since some of the vehicle body positioning pins 2393 are shared by several groups, the number of vehicle body positioning pins 2393 provided can decrease while the compatibility of the battery swap device 200 is improved. With the provision of the three vehicle body positioning mechanisms 239 at the three corners of the hoisting platform 231, a distance between the vehicle body positioning mechanisms 239 can be maximized, and the positioning accuracy can be improved.

Those skilled in the art should understand that the configuration of the battery swap device 200 is merely a preferred implementation, and those skilled in the art may adjust the specific configuration of the battery swap device 200 without departing from the principles of the disclosure.

By way of example, although the travel portion 220 is described in conjunction with an example in which the travel mechanism 221 and the travel wheel 222 are included, the specific configuration of the travel portion 220 is not limited to this, and those skilled in the art may adjust such a configuration. For example, it is possible that only one of the travel mechanism 221 and the travel wheel 222 is provided, or that the travel mechanism 221 is a wheel hub motor that directly drives the travel wheels 222 to operate, etc. For another example, it is also possible that no travel wheel 222 is provided, or that the travel wheel is replaced with other structures such as a sliding rail and a slider, a sliding ring and a guide rod, etc. For another example, it is also possible that the travel mechanism 221 takes the form of an electric cylinder, which directly drives the bottom frame 210 to move, rather than the cooperation between the gear motor and the first gear and rack pair. For another example, it is also possible that the first gear and rack pair is replaced with a gear and chain pair, a lead screw and nut pair, etc. For another example, it is also possible that the rack and the track 112 are directly fixed to the ground of the battery charging and swapping station rather than on the support 111. For another example, it is also possible that in the travel mechanism 221, the gear motor and the rack of the first gear and rack pair are exchanged in arrangement position, that is, the driving motor is fixed to the support 111 while the rack is fixedly connected to the bottom frame 210, so that the movement of the bottom frame 210 is also enabled.

For another example, the specific configuration of the hoistable battery swap portion in the above implementation is not always invariable and may be adjusted by those skilled in the art. For example, although the number of locking/unlocking mechanisms 232 is described by taking twelve as an example, the number and positions of locking/unlocking mechanisms 232 provided are not fixed and may be adjusted by those skilled in the art according to specific requirements. For another example, although the above implementation is described by taking an example in which two locking/unlocking mechanisms 232 are connected to both the lifting mechanism 237 and the translation mechanism 235 and four locking/unlocking mechanisms 232 are connected to only the lifting mechanism 237, this is merely a specific implementation, those skilled in the art can freely choose which locking/unlocking mechanisms 232 can be separately lifted and which locking/unlocking mechanisms can be translated and lifted. Of course, it is also possible that some of the locking/unlocking mechanisms 232 are each connected to only a translation mechanism 235 to achieve separate translations of the locking/unlocking mechanisms 232. For another example, although the locking/unlocking driving mechanisms 2322 of some of the locking/unlocking mechanisms 232 are each configured as a direct drive motor and the locking/unlocking driving mechanisms 2322 of the remaining locking/unlocking mechanisms 232 are each a combination of a motor and a speed reducer, those skilled in the art should understand that the above configuration of the locking/unlocking driving mechanisms 2322 is not unique and those skilled in the art may select the specific configuration of the locking/unlocking driving mechanisms 2322 according to requirements, for example, each of the locking/unlocking driving mechanisms is configured as a direct drive motor or a combination of a motor and a speed reducer.

For another example, the specific configuration of the lifting mechanism 237 and the translation mechanism 235 in the above implementations is not unique, and may be adjusted by those skilled in the art as long as the locking/unlocking mechanisms 232 can be lifted and translate. By way of example, the lifting mechanism 237 and the translation mechanism 235 may be each directly driven by an electric cylinder, so that corresponding transmission assemblies are omitted. For another example, it is also possible that the transmission assemblies in the lifting mechanism 237 and the translation mechanism 235 are each replaced with a gear and rack pair, a gear and chain pair, etc. For another example, it is possible that neither of the lifting guide mechanism 238 and the translation guide mechanism 236 is provided, or that either of the two is replaced with a sliding ring and a guide rod, etc. For another example, although in the above description, both the lifting mechanism 237 and the translation mechanism 235 are connected to one locking/unlocking mechanism 232 as an example, in other implementations, it is possible that one lifting mechanism 237 simultaneously drives the lifting movement of two or more locking/unlocking mechanisms 232, and one translation mechanism 235 simultaneously drives the translation of two or more lifting mechanisms 237.

For another example, the specific configurations of the hoisting driving mechanism 233 and the hoisting transmission mechanism 234 in the above implementation are not invariable, and may be adjusted by those skilled in the art. By way of example, although in the above description, the hoisting driving mechanism 233 is arranged on the outer side of the hoisting platform 231 as an example, it is apparent that the hoisting driving mechanism 233 may also be arranged below the hoisting platform 231. Of course, such a configuration may inevitably cause an increase in the height space occupied by the battery swap device 200. For another example, although in the above description, the hoisting transmission mechanism 234 is a rigid chain lifting mechanism as an example, the specific configuration of the hoisting transmission mechanism 234 is not unique as long as the hoisting transmission mechanism 233 can be arranged on the outer side of the hoisting platform 231. Those skilled in the art may replace the specific structural form of the hoisting transmission mechanism 234, for example, the hoisting transmission mechanism 234 may also be a gear and rack pair, a gear and chain pair, etc. For another example, it is also possible that the hoisting driving mechanism 233 is fixedly connected to the bottom frame 210 rather than being fixed to the housing 2341. For another example, it is also possible that an output axis of the hoisting driving mechanism 233 is parallel to the sliding direction of the rigid chain body 2342, but such a configuration may inevitably cause an increase in the space occupied by the battery swap device 200. For another example, the number and arrangement positions of the sliding channels may be adjusted. By way of example, only one, or three, four or more sliding channels may be provided; the sliding channels may be arranged side by side or may be distributed on two sides of the hoisting driving mechanism 233; and the sliding channels may be configured to have unequal or equal lengths, or to be symmetrical with respect to the hoisting driving mechanism 233.

For another example, the configuration of the vehicle body positioning mechanisms 239 may be adjusted by those skilled in the art. By way of example, the number and arrangement positions of the vehicle body positioning mechanisms 239 may be adjusted by those skilled in the art according to specific requirements. For another example, a grouping method for the plurality of vehicle body positioning mechanisms 239 may also be adjusted as long as there is at least one vehicle body positioning mechanism 239 in each group. For another example, the positioning driving assembly 2391 and the positioning transmission assembly 2392 of the vehicle body positioning mechanism 239 may be replaced with electric cylinders, and the vehicle body positioning pin 2393 may also be replaced with a positioning post, etc. For another example, it is also possible that the positioning transmission assembly 2392 takes the form of a gear and chain pair, a lead screw and nut pair, etc. rather than the gear and rack pair. Of course, the use of other transmission assemblies may increase the overall thickness of the battery swap device 200. For another example, it is possible that no positioning guide assembly 2394 is provided, or that the positioning guide assembly is replaced with a sliding rail and a slider, etc.

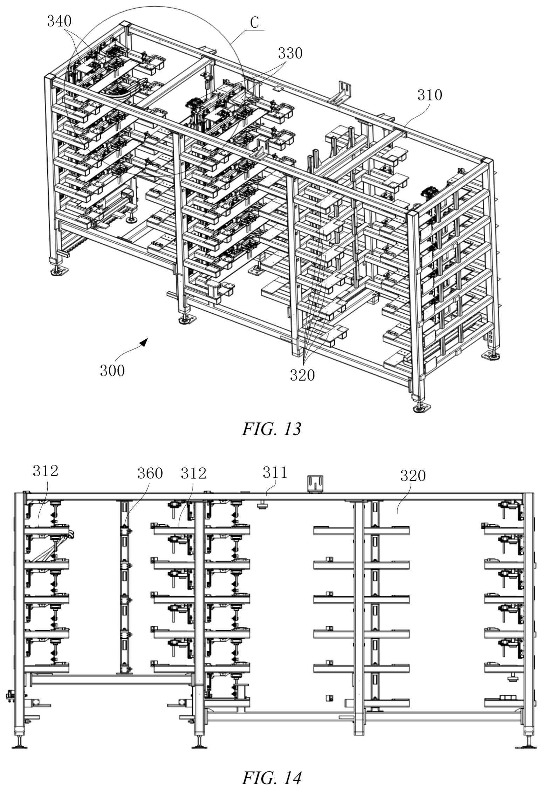

Referring next to FIGS. 13 to 15, in a preferred implementation, the battery rack 300 includes a frame 310. The frame 310 is provided with a plurality of battery compartments 320, and a part of the frame 310 corresponding to each battery compartment 320 is provided with a plurality of electrical connection portions 330, a plurality of liquid-cooling connection portions 340, a plurality of battery limiting members 350 and battery positioning portions 360.

Specifically, referring to FIGS. 13-14, the frame 310 includes a peripheral frame body 311 and a supporting member 312 arranged on the frame body 311. The frame body 311 and the supporting member 312 define the plurality of battery compartments 320. In the disclosure, the supporting member 312 is a supporting arm, and the battery compartment 320 includes at least one cantilever supporting arm at each corner. Preferably, there are eight supporting arms forming the battery compartment 320, in which two supporting arms are arranged at each of the four corners, each supporting arm has one end fixedly connected to the frame body 311, and the other end extending toward the inside of the battery compartment 320 in a width direction of an inlet of the battery compartment 320, and a gap for allowing a fork lifting the traction battery to pass through is formed between the ends of two supporting arms extending toward each other.

By forming the gap between the supporting arms that allows the fork lifting the traction battery to pass through, the space for the fork to pass through can be increased, so that the height of each layer of battery compartment 320 is decreased, more batteries can be arranged in a limited height space, the number of batteries accommodated by the battery rack 300 can be increased, and the difficulty of site selection of the battery rack 300 can be reduced.

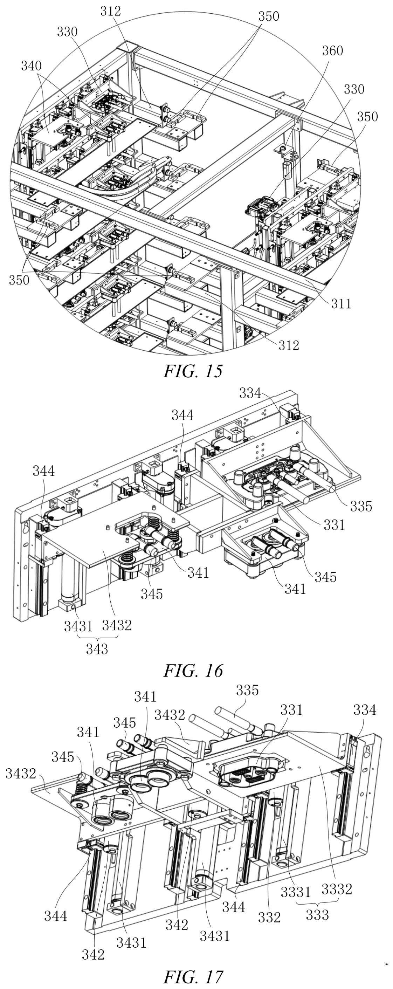

Referring to FIGS. 15-17, the electrical connection portion 330 includes an electrical connector 331, an electrical connection driving assembly 332, an electrical connection transmission assembly 333 and an electrical connection guide mechanism 334. The electrical connector 331 is configured to be docked with the traction battery, the electrical connection driving assembly 332 is fixedly connected to a part of the frame 310 corresponding to the battery compartment 320 and is connected to the electrical connection transmission assembly 333, the electrical connection transmission assembly 333 is connected to the electrical connector 331, and the electrical connection driving assembly 332 can drive the electrical connection transmission assembly 333 to operate such that the electrical connector 331 performs a lifting movement relative to the frame 310. The electrical connection guide mechanism 334 can provide guidance during the lifting movement of the electrical connector 331 relative to the frame 310.

The electrical connector 331 is provided with an electrical lead-out end 335, the electrical connector 331 can be docked with the traction battery, and the electrical lead-out end 335 is connected to the electrical connector 331 and extends in the horizontal direction. In the disclosure, the electrical lead-out end 335 is one of a power supply line, an electrical plug, or an electrical socket.

Preferably, the electrical connection driving assembly 332 is a gear motor, and the electrical connection transmission assembly 333 includes a fourth lead screw and nut pair 3331 and a first connection member 3332. The gear motor is fixed to the frame 310, a lead screw of the fourth lead screw and nut pair 3331 is mounted on the frame 310 and arranged in the vertical direction, and an output end of the gear motor is in transmission connection with the lead screw by means of a transmission belt. The first connection member 3332 is a first connecting plate group, a nut of the fourth lead screw and nut pair 3331 is connected to the first connecting plate group, and the electrical connector 331 is fixedly connected to the first connecting plate group.

The electrical connection guide mechanism 334 is preferably a sliding rail and a slider that cooperate with each other. Two sliding rails and two sliders are provided, in which the two sliding rails are fixed to the frame 310 and extend in the vertical direction, the two sliders are both fixedly connected to the first connecting plate group, and the first connecting plate group is thus connected to the frame 310 by means of the electrical connection guide mechanism 334.

Referring to FIG. 15, preferably, each battery compartment 320 in the disclosure is provided with two electrical connection portions 330. The two electrical connection portions 330 are respectively connected to parts of the frame 310 on two opposite sides of the battery compartment 320, and each electrical connection portion 330 can be connected to traction batteries of at least one specification to charge the traction batteries.

For each electrical connection portion 330, the nut of the fourth lead screw and nut pair 3331 performs a vertical lifting movement along the lead screw under the drive of the gear motor, and the first connecting plate group and the electrical connector 331 achieve the lifting movement under the drive of the nut and under the guidance of the electrical connection guide mechanism 334, so as to enable docking with and disengagement from the traction batteries.

Referring to FIGS. 15-17, the liquid-cooling connection portion 340 includes a liquid-cooling connector 341, a liquid-cooling connection driving assembly 342, a liquid-cooling connection transmission assembly 343 and a liquid-cooling connection guide mechanism 344. The liquid-cooling connector 341 is configured to be docked with the traction battery, the liquid-cooling connection driving assembly 342 is fixedly connected to a part of the frame 310 corresponding to the battery compartment 320 and is connected to the liquid-cooling connection transmission assembly 343, the liquid-cooling connection transmission assembly 343 is connected to the liquid-cooling connector 341, and the liquid-cooling connection driving assembly 342 can drive the liquid-cooling connection transmission assembly 343 to operate such that the liquid-cooling connector 341 performs a lifting movement relative to the frame 310. The liquid-cooling connection guide mechanism 344 can provide guidance during the lifting movement of the liquid-cooling connector 341 relative to the frame 310.

The liquid-cooling connector 341 is provided with a liquid-cooling lead-out end 345, the liquid-cooling connector 341 can be docked with the traction battery, and the liquid-cooling lead-out end 345 is connected to the liquid-cooling connector 341 and extends in the horizontal direction. In the disclosure, the liquid-cooling lead-out end 345 is a cooling pipe or a cooling pipe joint.

Preferably, the liquid-cooling connection driving assembly 342 is a gear motor, and the liquid-cooling connection transmission assembly 343 includes a fifth lead screw and nut pair 3431 and a second connection member 3432. The gear motor is fixed to the frame 310, a lead screw of the fifth lead screw and nut pair 3431 is mounted on the frame 310 and arranged in the vertical direction, and an output end of the gear motor is in transmission connection with the lead screw by means of a transmission belt. The second connection member 3432 is a second connecting plate group, a nut of the fifth lead screw and nut pair 3431 is connected to the second connecting plate group, and the liquid-cooling connector 341 is fixedly connected to the second connecting plate group.

The liquid-cooling connection guide mechanism 344 is preferably a sliding rail and a slider that cooperate with each other. Two sliding rails and two sliders are provided, in which the two sliding rails are fixed to the frame 310 and extend in the vertical direction, the two sliders are both fixedly connected to the second connecting plate group, and the second connecting plate group is thus connected to the frame 310 by means of the liquid-cooling connection guide mechanism 344.

Referring to FIG. 15, preferably, each battery compartment 320 in the disclosure is provided with two liquid-cooling connection portions 340. The two liquid-cooling connection portions 340 are connected to the frame 310 on the same side of the battery compartment 320. Each liquid-cooling connection portion 340 can be connected to traction batteries of at least one specification to cool the traction batteries during the process of charging the traction batteries. More specifically, in the disclosure, two liquid-cooling connection portions 340 and one electrical connection portion 330 are arranged on the frame 310 on the same side, and the three are all arranged on a one-piece mounting plate. The other electrical connection portion 330 is arranged on the frame 310 on a side opposite to the three connection portions.

For each liquid-cooling connection portion 340, the nut of the fifth lead screw and nut pair 3431 performs a vertical lifting movement along the lead screw under the drive of the gear motor, and the second connecting plate group and the liquid-cooling connector 341 achieve the lifting movement under the drive of the nut and under the guidance of the liquid-cooling connection guide mechanism 344, so as to enable docking with and disengagement from the traction batteries.

By configuring the electrical lead-out end 335 to extend in the horizontal direction, the height space occupied by the electrical connection portion 330 can be reduced, the overall height of the battery rack 300 can thus be decreased after the heights of all the battery compartments 320 are added up, so that the number of batteries accommodated by the battery rack 300 is increased, the difficulty of site selection of the battery rack 300 is reduced, and the efficiency of battery swap of the battery charging and swapping station is improved. With the provision of the electrical connection driving assembly 332 and the electrical connection transmission assembly 333, the automatic lifting of the electrical connector 331 can be achieved, and the degree of automation of the battery compartment 320 and the efficiency of battery swap can be improved. With the provision of the electrical connection guide mechanism 334, guidance can be provided during the lifting of the electrical connector 331, and the movement accuracy of the electrical connector 331 can be improved. With the provision of the plurality of liquid-cooling connection portions 340, batteries of various specifications can be cooled, and the compatibility of the battery compartment 320 can be improved. By configuring the liquid-cooling lead-out end 345 to extend in the horizontal direction, the height space occupied by the liquid-cooling connection portion 340 can be reduced, the overall height of the battery rack 300 can thus be decreased after the heights of all the battery compartments 320 are added up, so that the number of batteries accommodated by the battery rack 300 is increased, the difficulty of site selection of the battery rack 300 is reduced, and the efficiency of battery swap of the battery charging and swapping station is improved. With the provision of the liquid-cooling connection driving assembly 342 and the liquid-cooling connection transmission assembly 343, the automatic lifting of the liquid-cooling connector 341 can be achieved, and the degree of automation of the battery compartment 320 and the efficiency of battery swap can be improved. With the provision of the liquid-cooling connection guide mechanism 344, guidance can be provided during the lifting of the liquid-cooling connector 341, and the lifting accuracy of the liquid-cooling connector 341 can be improved.

Referring to FIG. 15 again, each battery compartment 320 is provided with a plurality of battery limiting members 350. The plurality of battery limiting members 350 are divided into multiple groups to limit traction batteries of different specifications. Preferably, the battery limiting member 350 is a bar-shaped limiting block, which is fixedly connected to the supporting member 312 that constitutes the battery compartments 320. In the disclosure, the plurality of bar-shaped limiting blocks are divided into two groups, and a plurality of bar-shaped limiting blocks in each group are arranged nearby two corners on one diagonal of the battery compartment 320. Each group includes three bar-shaped limiting blocks, two of which are located at the same corner and arranged perpendicular to each other, and the other of which is arranged at the other corner and extends in the width direction of the inlet of the battery compartment 320 (i.e., in the horizontal direction of FIG. 14). Referring to the orientation of FIG. 15, the two bar-shaped limiting blocks on the left side and one bar-shaped limiting block on the right side in the figure form one group, and the two bar-shaped limiting blocks on the upper side and one bar-shaped limiting block on the lower side form the other group.

Referring to FIGS. 14-15, one battery positioning portion 360 is provided inside each battery compartment 320, and the battery positioning portion 360 can be docked with traction batteries of different specifications. Preferably, the battery positioning portion 360 is a battery positioning pin, which is arranged on the frame 310 on an opposite side of the inlet of the battery compartment 320, and the battery positioning pin can be docked with a positioning hole in the traction battery.

In a possible control process, when the traction battery is transferred to the battery compartment 320, the traction battery is first flatly pushed into the battery compartment 320 through the inlet of the battery compartment 320 such that the traction battery is suspended in the battery compartment 320, the traction battery is then slowly dropped down such that the battery positioning pin is inserted into the positioning hole in the traction battery, the traction battery continues to be lowered after insertion, and the traction battery falls on the plurality of supporting members 312 under the limiting action of the bar-shaped limiting blocks, in which case the traction battery is arranged in place. Finally, a group of electrical connectors 331 and liquid-cooling connectors 341 corresponding to the traction battery is lowered to charge and cool the traction battery.

With the provision of the plurality of battery limiting members 350 inside the battery compartment 320, traction batteries having different outline dimensions can be limited, the compatibility of the battery compartment 320 with the traction batteries of different outline dimensions can thus be improved, and the accuracy of placing the traction batteries inside the battery compartment 320 can be improved. The traction battery is limited by using the bar-shaped limiting block, so that the structure is not only simple and easy to implement, but also has a good limiting effect. By arranging the battery limiting members 350 in each group nearby the two corners on one diagonal of the battery compartment 320, the opposite corners of the battery can be limited to improve the limiting accuracy. With the provision of the battery positioning portion 360, traction batteries of different specifications and models can be initially positioned by utilizing the battery positioning portion 360, the positioning accuracy of the traction batteries can be improved, and the compatibility of the battery compartment 320 with the traction batteries of different specifications can be improved.

Those skilled in the art should understand that the configuration of the battery rack 300 is merely a preferred implementation, and those skilled in the art may adjust the specific configuration of the battery rack 300 without departing from the principles of the disclosure.

By way of example, those skilled in the art may adjust the specific configuration of the frame 310. For example, the frame 310 is constructed by the frame body 311 and supporting rods arranged uninterruptedly. Of course, such a configuration may be not conducive to decreasing the overall height of the battery rack 300.

For another example, the specific configuration of the electrical connection portion 330 is not unique and may be adjusted by those skilled in the art. By way of example, the electrical connection driving assembly 332 and the electrical connection transmission assembly 333 may be replaced with electric cylinders. For another example, it is also possible that the electrical connection transmission assembly 333 takes the form of a gear and rack pair, a gear and chain pair, etc. rather than the lead screw and nut pair. For another example, it is also possible that no first connection member 3332 is provided, and the electrical connector 331 is directly connected to the nut of the lead screw and nut pair. For another example, the electrical connection guide mechanism 334 may be omitted or may be replaced with a sliding ring and a guide rod. For another example, the number and arrangement positions of the electrical connection portions 330 may also be changed, for example, two electrical connection portions 330 are arranged on the same side, or more electrical connection portions 330 are provided. For another example, although the electrical lead-out end 335 is described as extending in the horizontal direction, it is apparent that the electrical lead-out end 335 may also extend in a different direction such as the vertical direction. Of course, extending in a non-horizontal direction inevitably causes an increase in the height space occupied by the battery compartment 320.

For another example, those skilled in the art may also change the configuration of the liquid-cooling connection portion 340 on the basis of a specific application. By way of example, the liquid-cooling connection driving assembly 342 and the liquid-cooling connection transmission assembly 343 may be replaced with electric cylinders. For another example, it is also possible that the liquid-cooling connection transmission assembly 343 takes the form of a gear and rack pair, a gear and chain pair, etc. rather than the lead screw and nut pair. For another example, it is also possible that no second connection member 3432 is provided, and the liquid-cooling connector 341 is directly connected to the nut of the lead screw and nut pair. For another example, the liquid-cooling connection guide mechanism 344 may be omitted or may be replaced with a sliding ring and a guide rod. For another example, it is also possible that no liquid-cooling connection portions 340 is provided, or that the number and arrangement positions of the liquid-cooling connection portions 340 are adjusted. For example, two liquid-cooling connection portions 340 are arranged on opposite sides, or more liquid-cooling connection portions 340 are provided. For another example, although the liquid-cooling lead-out end 345 is described as extending in the horizontal direction, it is apparent that the liquid-cooling lead-out end 345 may also extend in a different direction such as the vertical direction. Of course, extending in a non-horizontal direction inevitably causes an increase in the height space occupied by the battery compartment 320.

For another example, the configuration of the battery limiting members 350 is not unique and may be adjusted by those skilled in the art without departing from the principles of the disclosure. By way of example, the specific structure of the battery limiting member 350 may be a limiting plate, a fiber rib and the like in addition to the bar-shaped limiting block. For another example, the number and arrangement positions of the battery limiting members 350 are not only limited to those described in the above embodiments, and those skilled in the art may perform adjustment according to requirements, for example, ensuring at least that there is one battery limiting member 350 for each group, and the arrangement position may be set on the two supporting members 312 on the same side. For another example, it is also possible that the battery limiting members 350 are divided into more groups, the constitution form of each group is not limited, it is possible to combine the battery limiting members 350 on the plurality of supporting members 312 into one group, and it is also possible that one or more battery limiting members 350 on a single supporting member 312 form one group. Of course, it is also possible that no battery limiting member 350 is provided.

For another example, the configuration of the battery positioning portions 360 is not invariable, the battery positioning portions may be omitted, or more battery positioning portions may be provided. Alternatively, it is also possible that the battery positioning portion may be in the structural form of a positioning protrusion, a positioning groove, etc. other than the battery positioning pin.

Those skilled in the art should understand that the above alternative implementations, or the alternative implementations and the preferable implementations may be cross-used cooperatively, so as to obtain new implementations that are suitable for more specific application scenarios by combining the above implementations.

Those skilled in the art should also understand that although some embodiments described herein include some but not other features included in other embodiments, combinations of features of different embodiments are meant to be within the scope of the disclosure and form different embodiments. For example, in the claims of the disclosure, any one of the claimed embodiments can be used in any combination.

Heretofore, the technical solutions of the disclosure have been described in combination with the preferred implementations shown in accompanying drawings. However, those skilled in the art can readily understand that the scope of protection of the disclosure is apparently not limited to these particular implementations. Those skilled in the art can make equivalent changes or substitutions to the related technical features without departing from the principles of the disclosure, and all the technical solutions with such changes or substitutions shall fall within the scope of protection of the disclosure.

## Claims

1. A battery charging and swapping station, comprising:
a battery swap platform, which comprises a platform body and a vehicle positioning portion arranged on the platform body, the platform body being configured to carry a vehicle with a battery to be swapped, and the vehicle positioning portion being configured to be capable of positioning different sizes of vehicles with a battery to be swapped;
a battery swap device, which is arranged below the platform body and comprises a bottom frame, a travel portion and a hoistable battery swap portion, the travel portion being connected to the bottom frame and configured to drive the bottom frame to move relative to the platform body in a length direction of the vehicle with a battery to be swapped, and the hoistable battery swap portion being liftably arranged on an upper portion of the bottom frame and configured to be dockable with chassis of vehicles with a battery to be swapped that have different battery mounting positions, and to swap traction batteries; and
a battery rack, which comprises a frame, the frame being provided with a plurality of battery compartments, at least one of the battery compartments being provided with a plurality of electrical connection portions, and each electrical connection portion being configured to be connectable to traction batteries of at least one specification so as to charge the traction batteries.

2. The battery charging and swapping station according to claim 1, wherein the vehicle positioning portion comprises V-shaped roller groups and I-shaped roller groups, the V-shaped roller group being configured to position one of a front wheel and a rear wheel of the vehicle with a battery to be swapped, and the I-shaped roller group being configured to support the other of the front wheel and the rear wheel for vehicles with a battery to be swapped that have different wheelbases.

3. The battery charging and swapping station according to claim 2, wherein the I-shaped roller group is further configured to have a length in the length direction of the vehicle with a battery to be swapped that is compatible with a wheelbase range of 2700-3300 mm.

4. The battery charging and swapping station according to claim 1, wherein the vehicle positioning portion further comprises a front wheel centering mechanism and a rear wheel centering mechanism, the front wheel centering mechanism and the rear wheel centering mechanism both being configured to be capable of center vehicles with a battery to be swapped that have different widths.

5. The battery charging and swapping station according to claim 4, wherein the front wheel centering mechanism and the rear wheel centering mechanism are further configured to be compatible with a vehicle width range of 860-2800 mm.

6. The battery charging and swapping station according to claim 1, wherein the battery swap platform further comprises a battery guide portion mounted below the platform body and configured to guide the traction battery to enter or exit the battery swap device.

7. The battery charging and swapping station according to claim 6, wherein the battery guide portion comprises a movement mechanism and a guide pusher, the movement mechanism being arranged on a support below the platform body and connected to the guide pusher, and the movement mechanism being configured to move the guide pusher relative to the platform body in the length direction of the vehicle with a battery to be swapped, so as to push the traction battery and the battery swap device to move synchronously during a movement of the battery swap device carrying the traction battery in the length direction of the vehicle with a battery to be swapped.

8. The battery charging and swapping station according to claim 7, wherein the movement mechanism comprises a pusher driving assembly and a pusher transmission assembly, the pusher driving assembly being fixedly connected to the support below the platform body and connected to the pusher transmission assembly, the pusher transmission assembly being connected to the guide pusher, and the guide pusher extending in a width direction of the vehicle with a battery to be swapped.

9. The battery charging and swapping station according to claim 8, wherein the pusher transmission assembly comprises a first lead screw and nut pair and a connecting plate, a lead screw of the first lead screw and nut pair being mounted on the support and arranged in the length direction of the vehicle with a battery to be swapped, the pusher driving assembly being in transmission connection with the lead screw of the first lead screw and nut pair, a nut of the first lead screw and nut pair being fixedly connected to the connecting plate, and the connecting plate being fixedly connected to the guide pusher.

10. The battery charging and swapping station according to claim 9, wherein the battery guide portion further comprises a pusher guide mechanism via which the connecting plate is connected to the support, the pusher guide mechanism being configured to provide guidance during a movement of the connecting plate relative to the platform body.

11. The battery charging and swapping station according to claim 7, wherein two movement mechanisms and two guide pushers are provided, the two movement mechanisms are arranged on two sides of the battery swap device in the length direction of the vehicle with a battery to be swapped, and each movement mechanism is connected to one guide pusher.

12. The battery charging and swapping station according to claim 7, wherein the battery guide portion further comprises a fixed guide member, which is fixedly connected to the support below the platform body.

13. The battery charging and swapping station according to claim 12, wherein the fixed guide member is a guide bar, which extends in a width direction of the vehicle with a battery to be swapped; and/or
the movement mechanism is provided with one fixed guide member on either side of the vehicle with a battery to be swapped in the width direction.

14. The battery charging and swapping station according to claim 1, wherein the travel portion comprises a travel mechanism, which is connected to the bottom frame and configured to drive the bottom frame to move in the length direction of the vehicle with a battery to be swapped.

15. The battery charging and swapping station according to claim 14, wherein the travel mechanism comprises a travel driving assembly and a travel transmission assembly, the travel driving assembly being connected to the travel transmission assembly, one of the travel driving assembly and the travel transmission assembly being fixedly connected to the bottom frame, and the other thereof being fixedly connected to the ground of the battery charging and swapping station or a support below the platform body.

16. The battery charging and swapping station according to claim 15, wherein the travel transmission assembly is a first gear and rack pair, a gear of the first gear and rack pair being connected to an output end of the travel driving assembly, one of the travel driving assembly and a rack of the first gear and rack pair being fixedly connected to the bottom frame, and the other thereof being fixedly connected to the ground of the battery charging and swapping station or the support below the platform body.

17. The battery charging and swapping station according to claim 1, wherein the travel portion further comprises a travel wheel arranged on the bottom frame.

18. The battery charging and swapping station according to claim 17, wherein a track is further arranged on the ground of the battery charging and swapping station or the support below the platform body, and the travel wheel is rollably arranged on the track.

19. The battery charging and swapping station according to claim 1, wherein the hoistable battery swap portion comprises a hoisting platform and a plurality of locking/unlocking mechanisms arranged on the hoisting platform, the hoisting platform being liftably connected to the bottom frame, and the plurality of locking/unlocking mechanisms being configured to adapt to traction batteries having different fastener arrangement positions.

20. The battery charging and swapping station according to claim 19, wherein the hoistable battery swap portion further comprises a lifting mechanism mounted on the hoisting platform and connected to the locking/unlocking mechanism, the lifting mechanism being configured to drive a lifting movement of the locking/unlocking mechanism connected thereto relative to the hoisting platform.

21. The battery charging and swapping station according to claim 20, wherein the lifting mechanism comprises a lifting driving assembly and a lifting transmission assembly, the lifting driving assembly being mounted on the hoisting platform and connected to the lifting transmission assembly, and the lifting transmission assembly being connected to the locking/unlocking mechanism.

22. The battery charging and swapping station according to claim 21, wherein the lifting transmission assembly is a second lead screw and nut pair, a lead screw of the second lead screw and nut pair being mounted on the hoisting platform and arranged in a vertical direction, the lifting driving assembly being in transmission connection with the lead screw of the second lead screw and nut pair, and a nut of the second lead screw and nut pair being fixedly connected to the locking/unlocking mechanism.

23. The battery charging and swapping station according to claim 20, wherein the hoistable battery swap portion further comprises a lifting guide mechanism via which the locking/unlocking mechanism connected to the lifting mechanism is connected to the hoisting platform, the lifting guide mechanism being configured to provide guidance during a lifting movement of the locking/unlocking mechanism relative to the hoisting platform.

24. The battery charging and swapping station according to claim 21, wherein the hoistable battery swap portion further comprises a translation mechanism mounted on the hoisting platform and connected to the lifting mechanism, the translation mechanism being configured to drive the lifting mechanism connected thereto and the locking/unlocking mechanism connected to the lifting mechanism to horizontally move relative to the hoisting platform.

25. The battery charging and swapping station according to claim 24, wherein the translation mechanism comprises a translation driving assembly and a translation transmission assembly, and the lifting mechanism further comprises a connection assembly, wherein the translation driving assembly is mounted on the hoisting platform and is connected to the translation transmission assembly, the translation transmission assembly is connected to the connection assembly, and the lifting driving assembly is mounted on the connection assembly.

26. The battery charging and swapping station according to claim 25, wherein the translation transmission assembly is a third lead screw and nut pair, a lead screw of the third lead screw and nut pair being mounted on the hoisting platform and arranged in a horizontal direction, the translation driving assembly being in transmission connection with the lead screw of the third lead screw and nut pair, and a nut of the third lead screw and nut pair being fixedly connected to the connection assembly.

27. The battery charging and swapping station according to claim 25, wherein the hoistable battery swap portion further comprises a translation guide mechanism via which the connection assembly is connected to the hoisting platform, the translation guide mechanism being configured to provide guidance during a horizontal movement of the connection assembly relative to the hoisting platform.

28. The battery charging and swapping station according to claim 19, wherein the hoistable battery swap portion further comprises a plurality of vehicle body positioning mechanisms arranged on the hoisting platform, which are divided into multiple groups to adapt to vehicles with a battery to be swapped that have different chassis positioning locations.

29. The battery charging and swapping station according to claim 28, wherein the vehicle body positioning mechanism comprises a positioning driving assembly, a positioning transmission assembly and a vehicle body positioning pin, the positioning driving assembly being fixedly connected to the hoisting platform and connected to the positioning transmission assembly, and the positioning transmission assembly being connected to the vehicle body positioning pin and configured to drive the positioning transmission assembly to operate such that the positioning transmission assembly drives a lifting movement of the vehicle body positioning pin.

30. The battery charging and swapping station according to claim 29, wherein the positioning transmission assembly is a second gear and rack pair, a gear of the second gear and rack pair being connected to an output end of the positioning driving assembly, and a rack of the second gear and rack pair being connected to the vehicle body positioning pin.

31. The battery charging and swapping station according to claim 29, wherein the vehicle body positioning mechanism further comprises a positioning guide assembly via which the vehicle body positioning pin is connected to the hoisting platform, the positioning guide assembly being configured to provide guidance during a lifting movement of the vehicle body positioning pin relative to the hoisting platform.

32. The battery charging and swapping station according to claim 28, wherein some of the vehicle body positioning mechanisms are shared by several groups.

33. The battery charging and swapping station according to claim 28, wherein the hoistable battery swap portion comprises three vehicle body positioning mechanisms, which are distributed at three corners of the hoisting platform.

34. The battery charging and swapping station according to claim 1, wherein each battery compartment is provided with a plurality of battery limiting members, which are divided into multiple groups to limit traction batteries of different specifications.

35. The battery charging and swapping station according to claim 34, wherein the battery limiting member is a bar-shaped limiting block, which is fixedly connected to a part of the frame that constitutes the respective battery compartment.

36. The battery charging and swapping station according to claim 34, wherein the plurality of battery limiting members are divided into two groups, and a plurality of battery limiting members in each group are arranged nearby two corners on one diagonal of the battery compartment.

37. The battery charging and swapping station according to claim 36, wherein each group comprises three battery limiting members, two of which are located at the same corner and arranged perpendicular to each other, and the other of which is arranged at the other corner and extends in a width direction of an inlet of the battery compartment.

38. The battery charging and swapping station according to claim 34, wherein each battery compartment is further provided with one battery positioning portion configured to be dockable with traction batteries of different specifications.

39. The battery charging and swapping station according to claim 38, wherein the battery positioning portion is a battery positioning pin, which is arranged on the frame on an opposite side of the inlet of the battery compartment and dockable with a positioning hole in the traction battery.

40. The battery charging and swapping station according to claim 1, wherein the electrical connection portion comprises an electrical connector, an electrical connection driving assembly and an electrical connection transmission assembly, the electrical connection driving assembly being fixedly connected to a part of the frame corresponding to the battery compartment and being connected to the electrical connection transmission assembly, the electrical connection transmission assembly being connected to the electrical connector, and the electrical connection driving assembly being configured to drive the electrical connection transmission assembly to operate such that the electrical connector performs a lifting movement relative to the frame.

41. The battery charging and swapping station according to claim 40, wherein the electrical connection transmission assembly comprises a fourth lead screw and nut pair and a first connection member, a lead screw of the fourth lead screw and nut pair being mounted on the frame and arranged in a vertical direction, the electrical connection driving assembly being in transmission connection with the lead screw of the fourth lead screw and nut pair, a nut of the fourth lead screw and nut pair being connected to the first connection member, and the electrical connector being fixedly connected to the first connection member.

42. The battery charging and swapping station according to claim 41, wherein the electrical connection portion further comprises an electrical connection guide mechanism via which the first connection member is connected to the frame, the electrical connection guide mechanism being configured to provide guidance during the lifting movement of the electrical connector relative to the frame.

43. The battery charging and swapping station according to claim 1, wherein each battery compartment is provided with two electrical connection portions, which are respectively connected to the frame on two opposite sides of the battery compartment.

44. The battery charging and swapping station according to claim 1, wherein each battery compartment is further provided with a plurality of liquid-cooling connection portions, each of which is configured to be connectable to traction batteries of at least one specification to cool the traction batteries during charging of the traction batteries.

45. The battery charging and swapping station according to claim 44, wherein the liquid-cooling connection portion comprises a liquid-cooling connector, a liquid-cooling connection driving assembly and a liquid-cooling connection transmission assembly, the liquid-cooling connection driving assembly being fixedly connected to a part of the frame corresponding to the battery compartment and being connected to the liquid-cooling connection transmission assembly, the liquid-cooling connection transmission assembly being connected to the liquid-cooling connector, and the liquid-cooling connection driving assembly being configured to drive the liquid-cooling connection transmission assembly to operate such that the liquid-cooling connector performs a lifting movement relative to the frame.

46. The battery charging and swapping station according to claim 45, wherein the liquid-cooling connection transmission assembly comprises a fifth lead screw and nut pair and a second connection member, a lead screw of the fifth lead screw and nut pair being mounted on the frame and arranged in a vertical direction, the liquid-cooling connection driving assembly being in transmission connection with the lead screw of the fifth lead screw and nut pair, a nut of the fifth lead screw and nut pair being connected to the second connection member, and the liquid-cooling connector being fixedly connected to the second connection member.

47. The battery charging and swapping station according to claim 46, wherein the liquid-cooling connection portion further comprises a liquid-cooling connection guide mechanism via which the second connection member is connected to the frame, the liquid-cooling connection guide mechanism being configured to provide guidance during the lifting movement of the liquid-cooling connector relative to the frame.

48. The battery charging and swapping station according to claim 44, wherein each battery compartment is provided with two liquid-cooling connection portions, which are connected to parts of the frame on the same side of the battery compartment.
